(19) Europäisches Patentamt
European Patent Office
Office européen des brevets

(11) Veröffentlichungsnummer : **0 141 776**
**B1**

(12) # EUROPÄISCHE PATENTSCHRIFT

(45) Veröffentlichungstag der Patentschrift : **08.07.87**

(51) Int. Cl.⁴ : **C 09 B 62/20**, C 09 B 62/503, D 06 P 3/66

(21) Anmeldenummer : **84810419.6**

(22) Anmeldetag : **24.08.84**

(54) **Reaktivfarbstoffe, deren Herstellung und Verwendung.**

(30) Priorität : **30.08.83 CH 4751/83**

(43) Veröffentlichungstag der Anmeldung : **15.05.85 Patentblatt 85/20**

(45) Bekanntmachung des Hinweises auf die Patenterteilung : **08.07.87 Patentblatt 87/28**

(84) Benannte Vertragsstaaten : **CH DE FR GB IT LI**

(56) Entgegenhaltungen :
**EP-A- 0 084 314**
**CH-A- 472 478**
**DE-A- 3 113 473**

(73) Patentinhaber : **CIBA-GEIGY AG**
**Klybeckstrasse 141**
**CH-4002 Basel (CH)**

(72) Erfinder : **Seitz, Karl, Dr.**
**Schützenweg 9**
**CH-4104 Oberwil (CH)**

EP 0 141 776 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen faserreaktiven Farbstoffen die gestellte Aufgabe gelöst wird.

Gegenstand der Erfindung sind Reaktivfarbstoffe der Formel

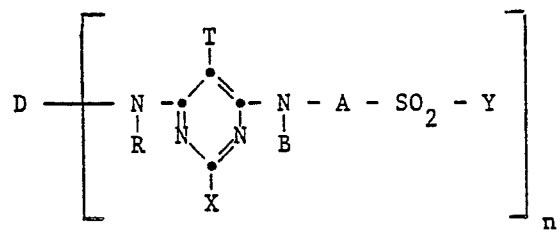

(1)

worin D der Rest eines organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen, Thioxanthon-, Nitroaryl-, Naphthochinon-, Pyrenchinon- oder Perylentetracarbimid-Reihe, R Wasserstoff oder gegebenenfalls substituiertes $C_{1-4}$-Alkyl, X ein als Anion abspaltbarer Substituent, A Arylen oder $C_{2-6}$-Alkylen, Y ein Rest $—CH=CH_2$ oder $—CH_2CH_2—Z$, Z ein unter alkalischen Bedingungen abspaltbarer anorganischer oder organischer Rest, B Wasserstoff oder der Rest eines gegebenenfalls substituierten Kohlenwasserstoffes, T ein negativer Substituent, und n = 1 oder 2 ist.

Der Rest D in Formel (1) kann an seinem Grundgerüst die bei organischen Farbstoffen üblichen Substituenten gebunden enthalten.

Als Beispiele für weitere Substituenten im Rest D seien genannt Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Reaktivfarbstoffe der Formel (1), worin D der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Der Rest R ist, falls es sich um einen Alkylrest handelt, geradkettig oder verzweigt; er kann weitersubstituiert sein, z. B. durch Halogen, Hydroxy, Cyan, $C_{1-4}$-Alkoxy, Carboxy oder Sulfo. Als Beispiele für R seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-

Hydroxybutyl, β-Cyanäthyl, Sulfomethyl, β-Sulfoäthyl, Aminosulfonylmethyl und β-Sulfatoäthyl. Vorzugsweise ist R Wasserstoff, Methyl oder Aethyl.

Der als Anion abspaltbare Substituent X ist zum Beispiel ein Halogenatom, wie Fluor, Chlor oder Brom, eine niedrigmolekulare Alkylsulfonylgruppe, wie Methylsulfonyl oder Aethylsulfonyl, der Phenylsulfonylrest oder eine Sulfonsäure- oder Phosphonsäuregruppe oder eine quaternisierte Ammoniumgruppe. Vorzugsweise ist X Fluor oder Chlor.

Das Brückenglied A ist als Arylen beispielsweise Phenylen, Naphthylen, der Rest des Biphenyls, Stilbens, Diphenylmethans oder Diphenyläthers. Diese Reste können als weitere Substituenten z. B. die folgenden enthalten: Methyl, Aethyl, Methoxy, Aethoxy, Fluor, Chlor, Brom, Nitro, Cyan, Acetylamino, Hydroxy, Carboxy oder Sulfo. Als Arylen ist A vorzugsweise Phenylen oder Naphthylen. Als $C_{2-6}$-Alkylenrest kommt für A in Formel (1) ein geradkettiger oder verzweigter Alkylenrest in Betracht, z. B. Aethylen, n-Propylen, Isopropylen, n-Butylen, n-Pentylen und n-Hexylen. Dieser kann ebenfalls weitersubstituiert sein, z. B. durch Chlor, Cyan oder Hydroxy. Bevorzugt ist $C_{2-4}$-Alkylen, das keinen weiteren Substituenten enthält, insbesondere Aethylen.

Als ein unter alkalischen Bedingungen abspaltbarer anorganischer oder organischer Rest Z kommt eine der folgenden anionisch abspaltbaren Gruppen in Betracht:

$-OSO_3H$, $-SSO_3H$, $-OCOCH_3$, $-OPO_3H_2$, 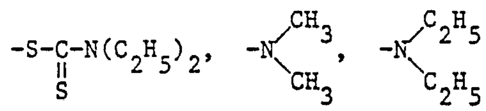 ,

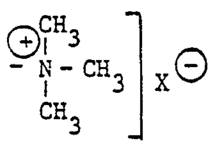 (X = Halogen), -Cl, -Br, -F, 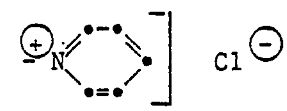 ,

$\oplus N(CH_3)_3$ $CH_3SO_4^{\ominus}$, 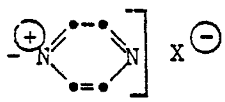 , 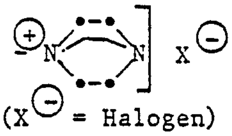 , (X⊖ = Halogen), 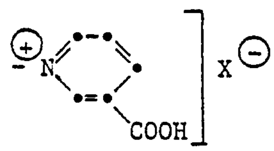

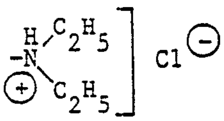 , 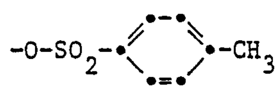 , $-O-SO_2-N(CH_3)_2$, 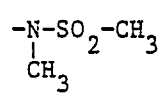 ,

$-O-SO_2-CH_3$ , $-S-C{\equiv}N$ , 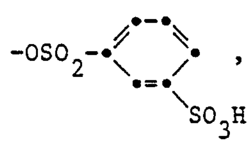 , 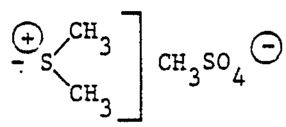 ,

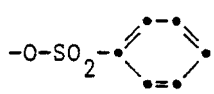 , $-OOCCCl_3$ , $-OOCCHCl_2$ , $-OOCCH_2Cl$,

$-O-O_2SR$ (R = Alkyl oder Aryl), $-O-SO_2N(C_2H_5)_2$ , 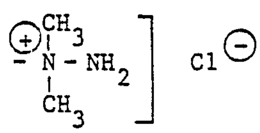 ;

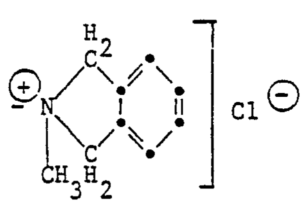

Vorzugsweise ist Z der Rest $—OSO_3H$, $—SSO_3H$, $—OCOCH_3$, $—OPO_3H_2$ oder —Cl.

Der Rest eines gegebenenfalls substituierten Kohlenwasserstoffs B ist z. B. ein Alkylrest, der geradkettig oder verzweigt ist, der vorzugsweise 1 bis 6 Kohlenstoffatome aufweist, und der weitersubstituiert sein kann, z. B. durch Halogen, Hydroxy, Cyan, Alkoxy, Carboxy oder Sulfo, oder ein unsubstituierter Alkylrest mit 7 bis 20 Kohlenstoffatomen, ein Cyclohexylrest, oder ein Phenylrest, der z. B. durch Methyl, Aethyl, Methoxy, Aethoxy, Chlor, Brom, Carboxy, Sulfo oder Sulfomethyl substituiert sein kann.

Als Beispiele für B seien die folgenden Substituenten genannt: Methyl, Aethyl, Propyl, Isopropyl, Butyl, Isobutyl, sek.-Butyl, tert.-Butyl, Pentyl, Hexyl, Nonyl, Dodecyl, Hexadecyl, Pentadecyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Chlorpropyl, γ-Brompropyl, Sulfomethyl, β-Sulfoäthyl, Aminosulfonylmethyl, β-Sulfatoäthyl, Cyclohexyl, Phenyl, o-, m- oder p-Chlorphenyl, o-, m- oder p-Methylphenyl, p-Aethylphenyl, p-Methoxyphenyl, o-, m- oder p-Sulfophenyl, p-Carboxyphenyl und p-Sulfomethylphenyl. Bevorzugt sind unsubstituierte Alkylreste mit 1 bis 4 Kohlenstoffatomen.

Insbesondere ist B Wasserstoff oder ein Rest der Formel

$$—A—SO_2—Y \quad (2),$$

worin A und Y die unter Formel (1) angegebenen Bedeutungen haben.

Falls B ein Rest der Formel (2) ist, können die beiden Reste der Formel (2), welche an das Stickstoffatom des externen Restes in Formel (1) gebunden sind, gleich oder verschieden sein. Vorzugsweise sind beide Reste der Formel (2) gleich.

Der Rest T ist als negativer Substituent im konventionellen Sinne zu verstehen. Es handelt sich dabei um ein Schlüsselatom, wie z. B. Chlor, das infolge seiner grossen Rumpfladung die Bindungselektronen stärker zu sich herüberzieht als das Kohlenstoffatom des Pyrimidinringes, an das T gebunden ist, und daher auf den Kohlenstoff positivierend einwirkt. Oder es handelt sich um eine Atomgruppe, wie z. B. Nitro, worin das mit dem Kohlenstoff verbundene Atom infolge seiner positiven Aufladung, die in der gleichen Richtung elektronenverschiebend wirkt wie die grössere Rumpfladung beim Chlor, auch hier überwiegend das Bindungselektronenpaar beansprucht und dadurch einen positivierenden Einfluss auf den Kohlenstoff ausübt. Als Beispiele für mögliche negative Substituenten T seien genannt: Nitro, Alkoxysulfonyl, Alkylsulfonyl, Alkylsulfinyl, Cyan, Alkoxycarbonyl, Carboxy, Alkanoyl, Chlor und Hydroxy.

Der in eckige Klammern eingeschlossene Teil von Formel (1) ist ein Reaktivrest, welcher ein- oder zweimal im Molekül vorhanden sein kann; beide Formelvarianten sind gleich wichtig. Falls n = 2 ist, können die beiden Reaktivreste gleich oder verschieden sein; vorzugsweise sind beide Reste gleich. Der Reaktivrest enthält zwei Substituenten, X und Y, die nach Art einer nucleophilen Substitution und nach Art einer nucleophilen Addition reagieren können.

Unter faserreaktiven Verbindungen sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Bevorzugte Ausbildungsformen der Reaktivfarbstoffe der Formel (1) sind:

a) Reaktivfarbstoffe der Formel (1), worin X Fluor oder Chlor ist.

b) Reaktivfarbstoffe der Formel (1), worin T Methylsulfonyl ist.

c) Reaktivfarbstoffe der Formel (1), worin B Wasserstoff oder $C_{1-4}$-Alkyl, und A gegebenenfalls substituiertes Phenylen oder Naphthylen, oder $C_{2-6}$-Alkylen ist.

d) Reaktivfarbstoffe der Formel (1), worin B ein Rest der Formel

$$—A—SO_2—Y \quad (2)$$

ist, worin A und Y die unter Formel (1) angegebenen Bedeutungen haben.

e) Reaktivfarbstoffe der Formel (1), worin A Aethylen ist.

Die unter a) bis e) jeweils nicht genannten Symbole der Formel (1) haben die bei der Erläuterung der Formel (1) angegebenen Bedeutungen. In Betracht zu ziehen sind insbesondere auch Kombinationen von Merkmalen gemäss a) bis e). Bevorzugt sind weiterhin:

f) Reaktivfarbstoffe gemäss c), der Formel

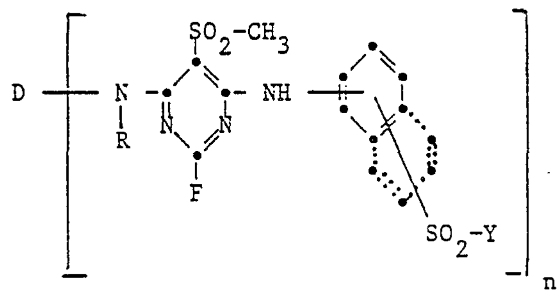

(3)

worin D, R, Y und n die unter Formel (1) angegebenen Bedeutungen haben, und der Benzol- bzw. Naphthalinrest ausser $—SO_2—Y$ weitere Substituenten enthalten kann.

g) Reaktivfarbstoffe gemäss c), der Formel

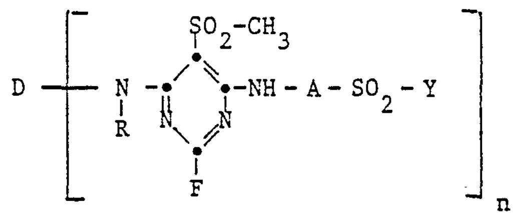

(4)

worin D, R, Y und n die unter Formel (1) angegebenen Bedeutungen haben, und A $C_{2-4}$-Alkylen ist.

h) Reaktivfarbstoffe gemäss g), worin A Aethylen ist.

i) Reaktivfarbstoffe gemäss d), der Formel

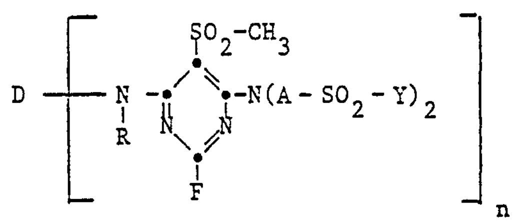

(5)

worin D, R, Y und n die unter Formel (1) angegebenen Bedeutungen haben, und A $C_{2-4}$-Alkylen ist.

j) Reaktivfarbstoffe gemäss i), worin A Aethylen ist.

k) Reaktivfarbstoffe der Formel (1) oder gemäss a) bis j), worin Y Vinyl, β-Sulfatoäthyl, β-Thiosulfatoäthyl, β-Phosphatoäthyl, β-Chloräthyl oder β-Acetoxyäthyl ist.

l) Reaktivfarbstoffe der Formel (1) oder gemäss a) bis k), worin D der Rest eines Mono- oder Disazofarbstoffes ist.

m) Reaktivfarbstoffe der Formel (1) oder gemäss a) bis k), worin D der Rest eines Metallkomplexazo- oder Formazanfarbstoffes ist.

n) Reaktivfarbstoffe der Formel (1) oder gemäss a) bis k), worin D der Rest eines Anthrachinonfarbstoffes ist.

o) Reaktivfarbstoffe gemäss m), worin D der Rest eines 1 : 1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

Bevorzugt sind insbesondere:

p) Reaktivfarbstoffe gemäss 1), der Formel

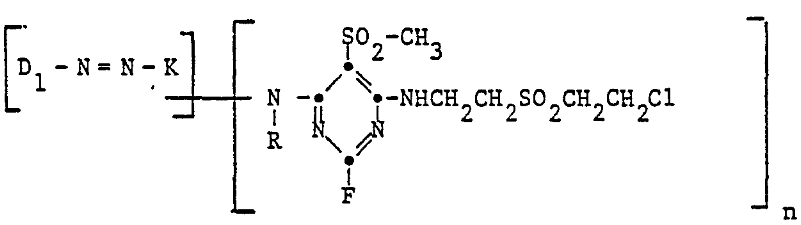

(6)

worin $D_1$ der Rest einer Diazokomponente der Benzol- oder Naphthalinreihe, K der Rest einer Kupplungskomponente der Benzol- oder Naphthalinreihe oder der heterocyclischen Reihe, R Wasserstoff, Methyl oder Aethyl, und n = 1 oder 2 ist, und der Reaktivrest an die Diazokomponente oder an die Kupplungskomponente gebunden ist, oder je ein Reaktivrest an die Diazokomponente und an die Kupplungskomponente gebunden ist.

q) Reaktivfarbstoffe gemäss 1), der Formel

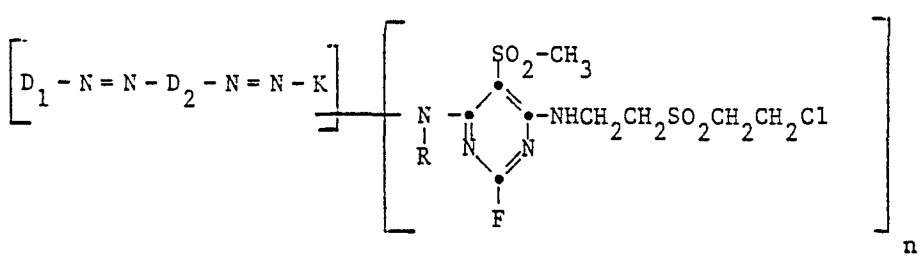

(7)

worin $D_1$ und $D_2$ je ein Rest einer Diazokomponente der Benzol- oder Naphthalinreihe, K der Rest einer Kupplungskomponente der Benzol- oder Naphthalinreihe oder der heterocyclischen Reihe, R Wasserstoff, Methyl oder Aethyl, und n = 1 oder 2 ist, und der Reaktivrest an die Diazokomponente $D_1$ oder an die Kupplungskomponente K gebunden ist, oder je ein Reaktivrest an $D_1$ und K gebunden ist.

r) Reaktivfarbstoffe gemäss 1), der Formel

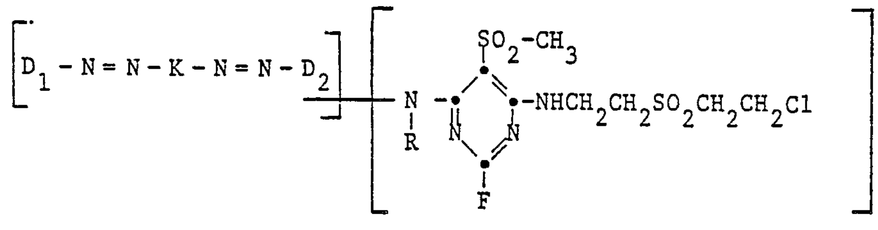

(8)

worin $D_1$ und $D_2$ je ein Rest einer Diazokomponente der Benzol- oder Naphthalinreihe, K der Rest einer Kupplungskomponente der Aminonaphtholsulfonsäure-Reihe, R Wasserstoff, Methyl oder Aethyl, und n = 1 oder 2 ist, und der Reaktivrest an die Diazokomponente $D_1$ oder an die Diazokomponente $D_2$ gebunden ist, oder je ein Reaktivrest an $D_1$ und $D_2$ gebunden ist.

s) 1 : 1-Kupferkomplexe von Reaktivfarbstoffen gemäss p) bis r).

Das Verfahren zur Herstellung von Reaktivfarbstoffen der Formel (1) ist dadurch gekennzeichnet, dass man organische Farbstoffe der Formel

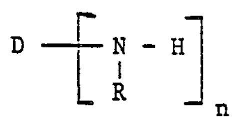

(9)

oder Farbstoffvorprodukte, mindestens ein Aequivalent eines Pyrimidins der Formel

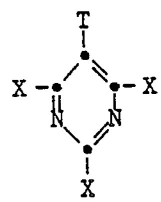

(10)

und mindestens ein Aequivalent eines Amins der Formel

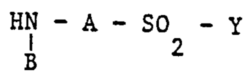

(11)

in beliebiger Folge zu einem Reaktivfarbstoff der Formel (1) kondensiert, wobei D, R, n, X, T, A, Y und B in den Formeln (9) bis (11) die unter Formel (1) angegebenen Bedeutungen haben, und dass man im Falle der Verwendung von Farbstoffvorprodukten, diese in die gewünschten Endfarbstoffe umwandelt.

Gegebenenfalls wird an das erfindungsgemässe Verfahren eine weitere Umwandlungsreaktion angeschlossen. Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Da unter bestimmten Voraussetzungen Hydrolyse eines Halogenpyrimidinrestes eintritt, muss ein Zwischenprodukt, welches Acetylaminogruppen enthält, zwecks Abspaltung der Acetylgruppen verseift werden, bevor mit einem Halogenpyrimidin kondensiert wird. Welche Reaktion bei der Herstellung eines sekundären Kondensationsproduktes aus einem Amin der Formel (11), dem Pyrimidin der Formel (10) und dem organischen Farbstoff der Formel (9) oder einem Vorprodukt zweckmässigerweise zuerst ausgeführt wird, die des Pyrimidins mit dem Amin oder mit dem organischen Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen. Als weitere Umwandlungsreaktion kommt eine nachträgliche Umsetzung am Rest X in Betracht. Gegebenenfalls können abspaltbare Reste X nach der Kondensation des Pyrimidins der Formel (1) mit einem Farbstoff der Formel (9) oder einem Farbstoffvorprodukt gegen andere abspaltbare Reste ausgetauscht werden. So kann z. B. durch Einwirkung eines Halogenierungsmittels ein Halogenatom gegen ein anderes ausgetauscht werden. Durch Einwirkung tertiärer Basen, wie Trimethylamin, Pyridin oder 1,4-Diazabicyclo-[2,2,2]-octan werden entsprechende Ammoniumverbindungen, und durch Quaternisierung mit Hydrazinen, wie N,N-Dimethylhydrazin, entsprechende Hydraziniumverbindungen erhalten. Mit Sulfiten, z. B.

Natriumsulfit, und Sulfinaten kann man einen Austausch von Halogen gegen die Sulfogruppe bzw. eine Sulfonylgruppe, z. B. die 3'-Carboxyphenylsulfonylgruppe und dergl., bewirken. Durch Umsetzung mit Cyaniden, z. B. Kaliumcyanid, und Thiocyanaten, z. B. Kaliumrhodanid, ist ein Ersatz von Chlor gegen die Nitril- bzw. Thiocyanatgruppe möglich, die ebenfalls reaktiv sind. Ferner können auch Halogenatome oder andere reaktive Gruppen durch Einwirkung von Natriumazid oder Verbindungen, die reaktive Methylengruppen enthalten, z. B. Cyanoessigester, Malonester und Acetylaceton, gegen die entsprechenden Reste ausgetauscht werden. Der Ersatz eines abspaltbaren Substituenten X durch einen anderen abspaltbaren Substituenten kann in vielen Fällen auch vor der Kondensation des Pyrimidins der Formel (10) mit einem Farbstoff der Formel (9) oder einem Farbstoffvorprodukt erfolgen.

Ferner können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z. B. durch Veresterung oder eine Additionsreaktion. Beispielsweise kann man einen Farbstoff, worin Y ein Rest $HO—CH_2CH_2—$ ist, herstellen und das Zwischenprodukt vor oder nach der Acylierung mit Schwefelsäure umsetzen, so dass die Hydroxygruppe in die Sulfatogruppe überführt wird ; oder man verwendet einen analogen Farbstoff, worin Y die Vinylgruppe $H_2C=CH—$ ist, und lagert an das Zwischenprodukt Thioschwefelsäure an, wobei ein Rest $HO_3SS—CH_2CH_2—$ entsteht. Die Sulfatierung der Hydroxygruppe in einem Farbstoff der Formel (1) oder einem geeigneten Vorprodukt, erfolgt z. B. durch Umsetzung mit konzentrierter Schwefelsäure bei 0 °C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80 °C erfolgen. Vorzugsweise erfolgt die Sulfatierung durch Eintragen der betreffenden Verbindung in Schwefelsäuremonohydrat bei Temperaturen zwischen 5 und 15 °C. Die Einführung eines anderen unter alkalischen Bedingungen abspaltbaren Restes für Z in eine Verbindung der Formel (1) oder ein Zwischenprodukt anstelle der Sulfatogruppe, beispielsweise einer Thiosulfatogruppe erfolgt in an sich bekannter Weise. Der Weg der Herstellung über eine Zwischenstufe des Reaktivrestes geht in vielen Fällen einheitlich und vollständig.

Die Verfahrensvariante, bei welcher man von Farbstoffvorprodukten ausgeht, ist geeignet zur Herstellung von Reaktivfarbstoffen der Formel (1), worin D der Rest eines aus zwei oder mehr als zwei Komponenten zusammengesetzten Farbstoffes ist. Beispiele für derartige, aus zwei oder mehr als zwei Komponenten zusammengesetzte Farbstoffe sind : Monoazo-, Disazo-, Trisazo-, Metallkomplexazo-, Formazan- und Azomethinfarbstoffe. Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Rest gemäss Formel (1) enthalten, ausgeht, oder diese faserreaktiven Reste in hierfür geeignete Zwischenprodukte mit Farbstoffcharakter einführt.

Bevorzugt sind Reaktivfarbstoffe der Formel (1), worin D der Rest eines Mono- oder Disazofarbstoffes oder eines Metallkomplexazofarbstoffes ist. In diesem Falle sind die Reaktivreste der Formel

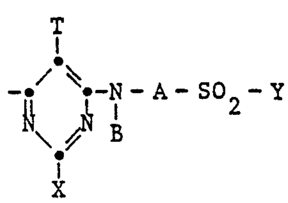

(12)

an die Diazo- oder Kupplungskomponente, oder, falls n = 2 ist, an verschiedene oder gleiche Reste von Ausgangskomponenten, d. h. Diazo- oder Kupplungskomponenten, gebunden. Vorzugsweise sind, für den Fall, dass n = 2 ist, die beiden Reaktivreste an je eine Komponente, Diazokomponente oder Kupplungskomponente, gebunden. Die Reaktivfarbstoffe haben dann z. B. die Formeln

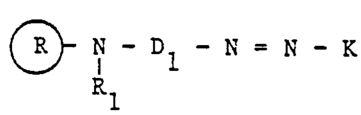

(13)

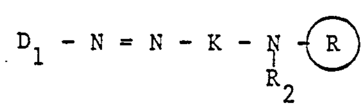

(14)

und

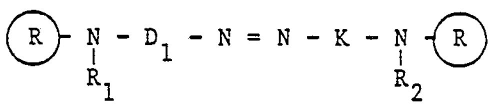 (15)

worin $R_1$ und $R_2$ unabhängig voneinander die gleiche Bedeutung haben wie R in Formel (1), $D_1$ der Rest einer Diazokomponente, und K der Rest einer Kupplungskomponente ist, und ® einen Reaktivrest der Formel (12) bedeutet. In Betracht zu ziehen sind auch Reaktivfarbstoffe der Formeln (13) bis (15), worin der Rest $D_1$ und/oder K noch einen weiteren Reaktivrest einschliesst, so dass auch tri- und tetra-reaktive Farbstoffe umfasst sind. Die zusätzlichen, in $D_1$ oder K eingeschlossenen Reaktivreste können, wie ®, über Aminogruppe, oder in anderer Weise, z. B. durch eine direkte Bindung an $D_1$ bzw. K gebunden sein.

Ein gegebenenfalls in $D_1$ oder K eingeschlossener zusätzlicher Reaktivrest ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe, durch ein abspaltbares Atom oder eine abspaltbare Gruppe substituierter carbo- oder heterocyclischer 4-, 5- oder 6-Ringe enthaltender Rest oder ein direkt über ein Kohlenstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein über eine Aminogruppe gebundener, Halogenatome enthaltender sechsgliedriger heterocyclischer Rest, wie ein Halogentriazin- oder Halogenpyrimidinrest oder ein aliphatischer Acylrest, wie ein Halogenacetyl- oder Halogenpropionylrest.

Insbesondere ist der zusätzliche Reaktivrest ein direkt oder über ein Brückenglied gebundener Vinylsulfonyl-, β-Sulfatoäthylsulfonyl-, β-Thiosulfatoäthylsulfonyl-, β-Chloräthylsulfonyl- oder β-Acetoxyäthylsulfonyl-Rest. Somit sind vorzugsweise auch Farbstoffe des in den drei letzten Ausführungsbeispielen dargestellten Typs in Betracht zu ziehen.

Die obigen Erläuterungen gelten sinngemäss auch für Disazofarbstoffe (siehe Beispiel 6) und Metallkomplexazofarbstoffe, sowie für andere in der Definition des Farbstoffrestes D in Formel (1) genannte Chromophore.

In Betracht zu ziehen sind ferner auch Reaktivfarbstoffe der Formel (1), worin einer der Reaktivreste oder beide über einen Rest der Formel

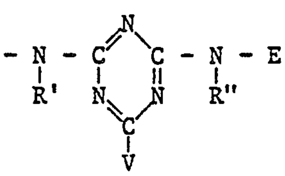 (16)

an den Chromophor gebunden sind. Dabei ist der Rest der Formel (12) über die —N(R)-Gruppe an E gebunden ; E ist ein gegebenenfalls substituiertes aliphatisches oder aromatisches Brückenglied. Das Brückenglied E ist vorzugsweise ein Alkylen- oder Arylenrest. So kann E ein langer (z. B. mit 10 oder mehr Kohlenstoffatomen) oder kürzerer, geradkettiger oder verzweigter Alkylenrest sein ; insbesondere kommt ein Alkylenrest mit 2 bis 6 Kohlenstoffatomen in Betracht, z. B. Aethylen, Propylen, Butylen, Hexylen oder Cyclohexylen. Als Arylenrest ist E z. B. ein Naphthylenrest, der Rest eines Diphenyls oder Stilbens oder insbesondere ein Phenylenrest. Der Rest E kann weitere Substituenten enthalten, z. B. Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propyloxy und Isopropyloxy, Carboxy oder Sulfo. R′ und R″ sind unabhängig voneinander Wasserstoff oder ein gegebenenfalls substituierter $C_{1-4}$-Alkylrest ; und V ist ein Halogenatom, eine gegebenenfalls substituierte Aminogruppe, Hydroxy, eine Alkoxy-, Aryloxy-, Alkylthio- oder Arylthiogruppe.

Falls man von Farbstoffvorprodukten ausgeht, gelangt man zu den Reaktivfarbstoffen der Formel (1), indem man eine Komponente des Farbstoffes der Formel (9), die eine Gruppe —N(R)H enthält, und ein Pyrimidin der Formel (10) kondensiert, vorher oder nachher mit einem Amin der Formel (11) kondensiert, und mit der anderen Komponente des Farbstoffes der Formel (9) umsetzt. Bei der Herstellung der bevorzugten Azofarbstoffe müssen die Diazokomponenten und die Kupplungskomponenten zusammen mindestens eine Aminogruppe —N(R)H, und können weitere Aminogruppen enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw. Nitrogruppe vor der Kondensation mit dem 2,4,6-Trihalogen-pyrimidin durch Verseifen bzw. Reduzieren in die $H_2N$-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho-ortho′-Stellung zur Azobrücke komplexbildende Gruppen, z. B.

Hydroxy- oder Carboxygruppen, enthalten, vor oder gegebenenfalls auch nach der Kondensation mit dem 2,4,6-Trihalogen-pyrimidin der Formel (10) mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxydative Kupferung in Betracht.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Organische Farbstoffe der Formel (9)

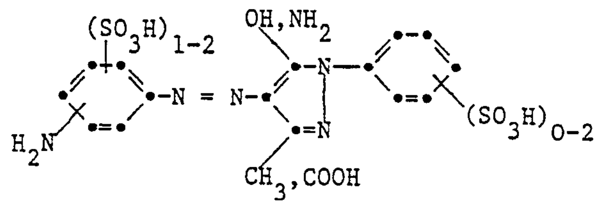

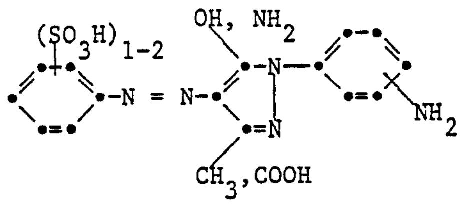

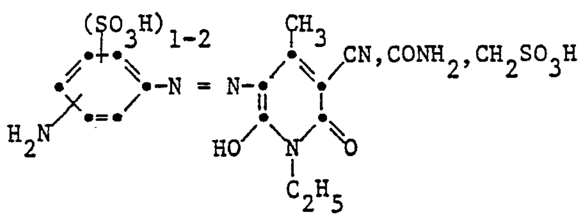

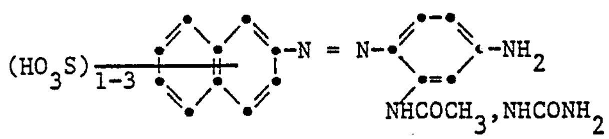

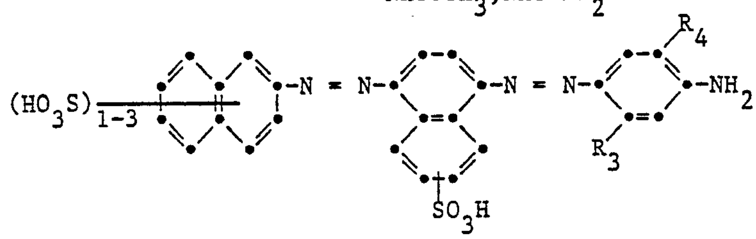

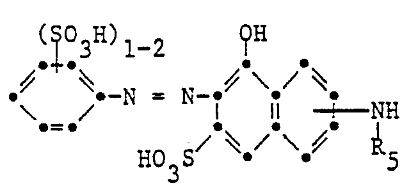

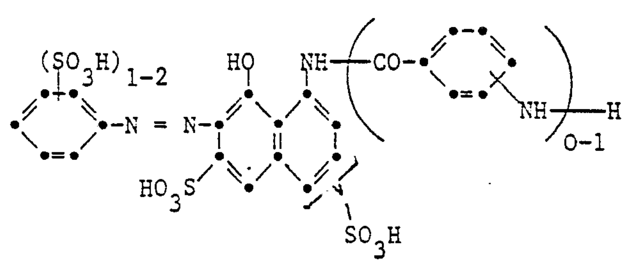

(Fortsetzung)

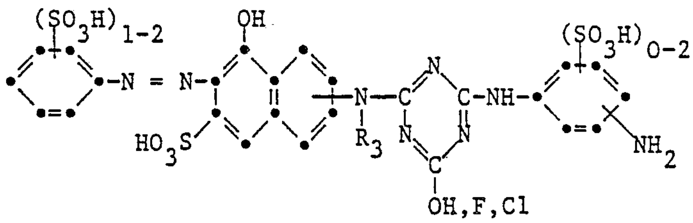

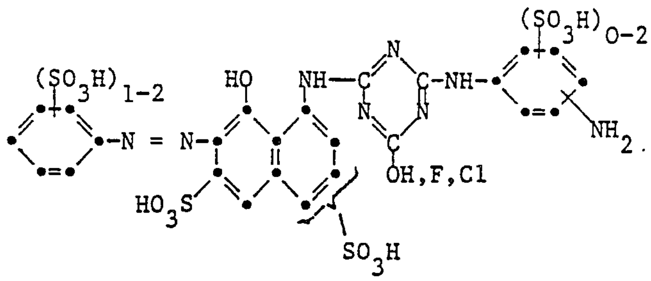

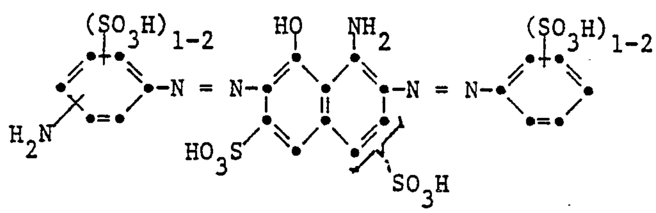

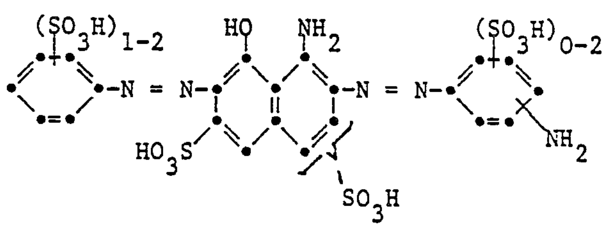

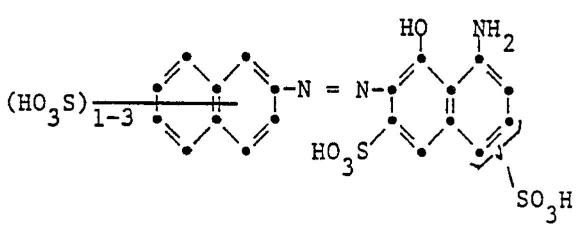

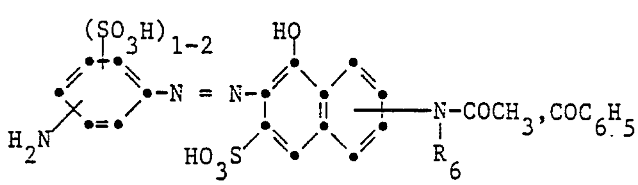

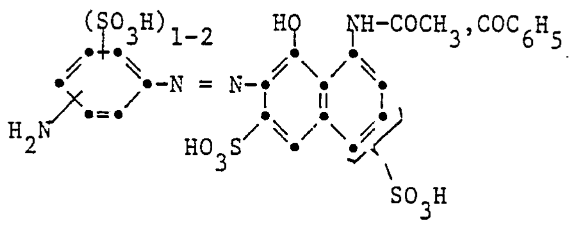

(Fortsetzung)

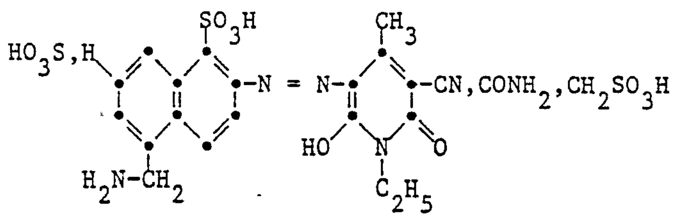

Metallkomplexe von Farbstoffen der Formeln :

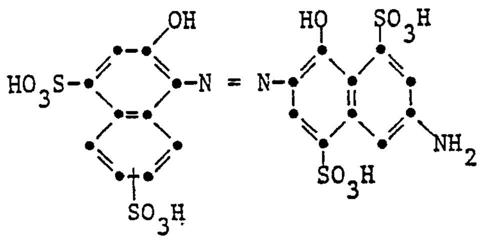

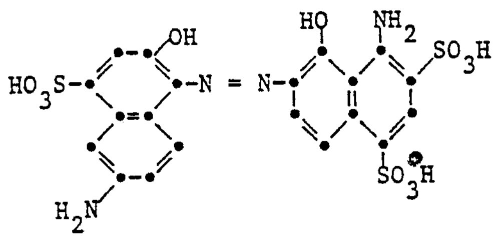

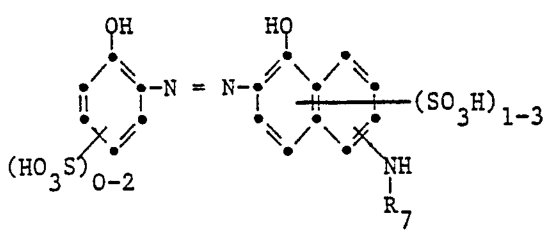

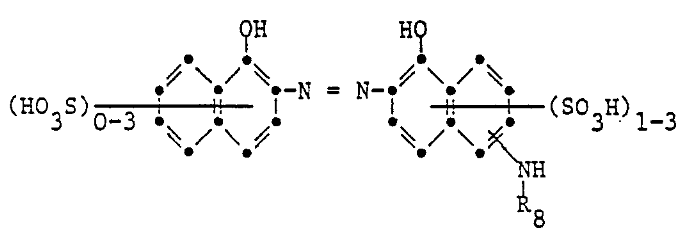

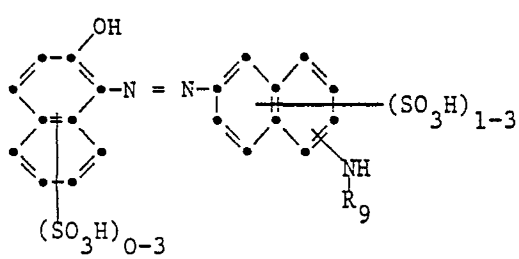

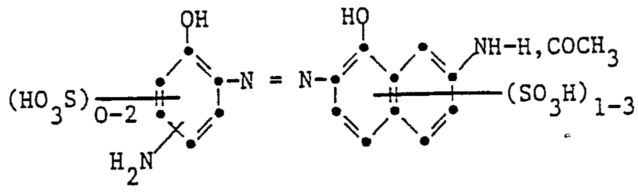

Als Metallatome sind Cu (1 : 1-Komplex) oder Cr und Co (1 : 2-Komplex) bevorzugt. Cr- und Co-Komplexe können die Azoverbindung der oben angegebenen Formel einmal oder zweimal enthalten, d. h. die können symmetrisch oder mit beliebigen anderen Liganden unsymmetrisch aufgebaut sein.

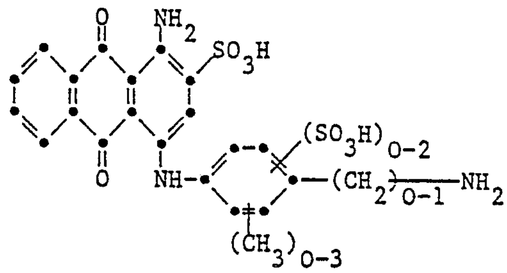

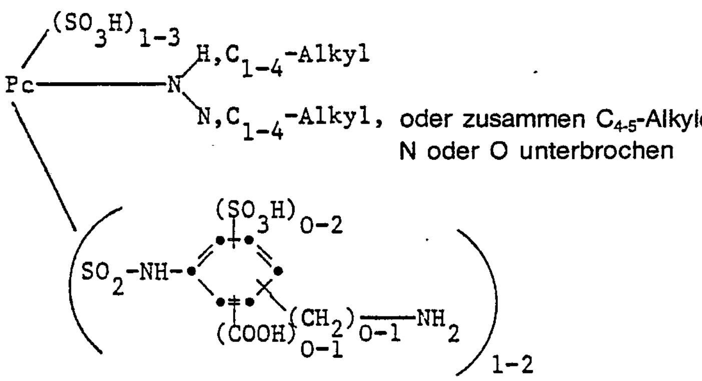

oder zusammen $C_{4-5}$-Alkylen, gegebenenfalls durch N oder O unterbrochen

In dieser Formel steht Pc für den Cu- oder Ni-Phthalocyaninrest, die Gesamtzahl der Substituenten am Pc-Gerüst ist 4.

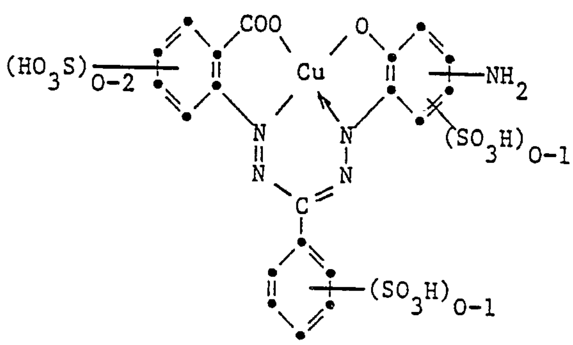

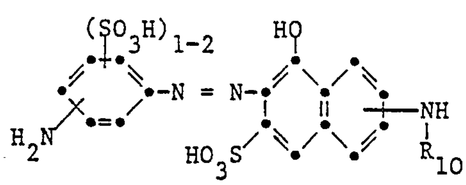

(Fortsetzung)

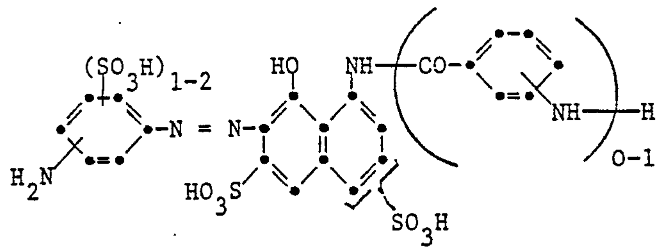

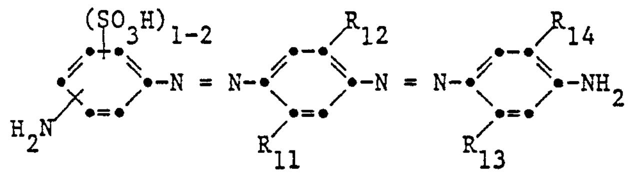

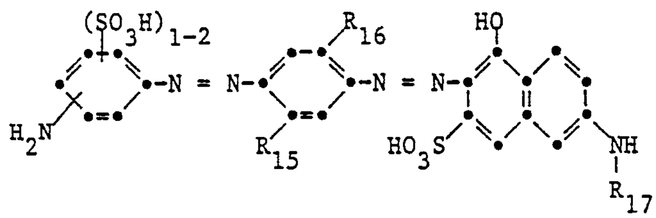

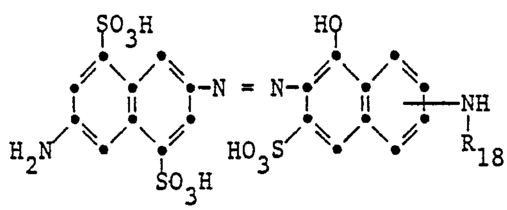

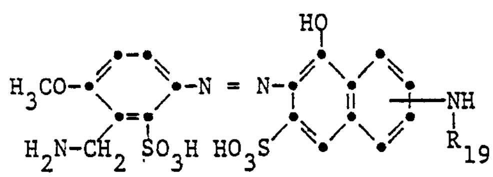

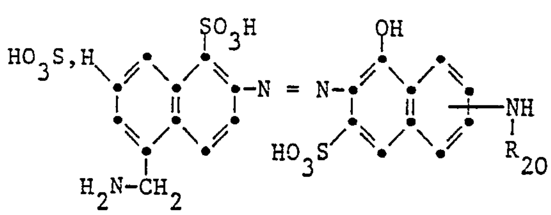

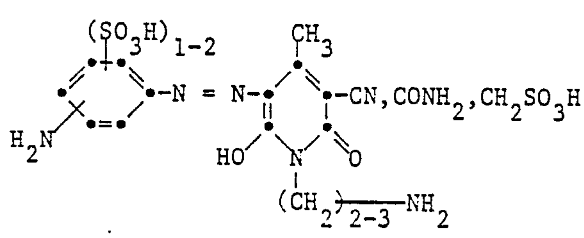

(Fortsetzung)

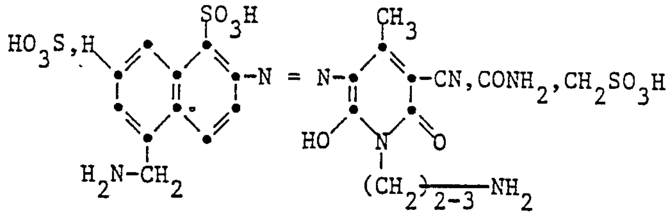

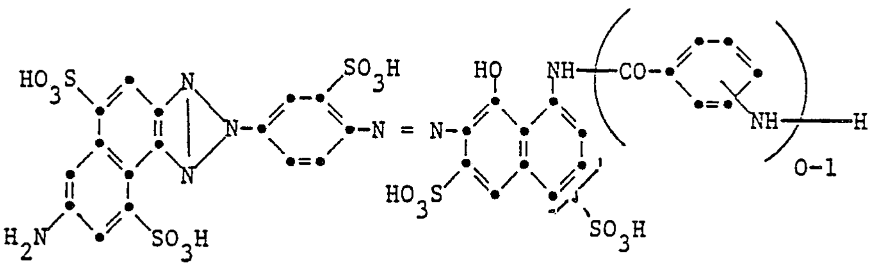

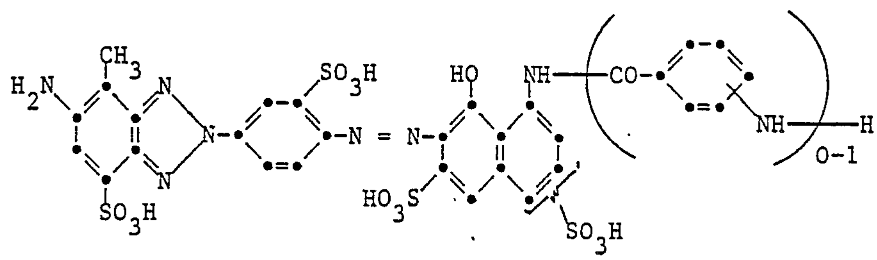

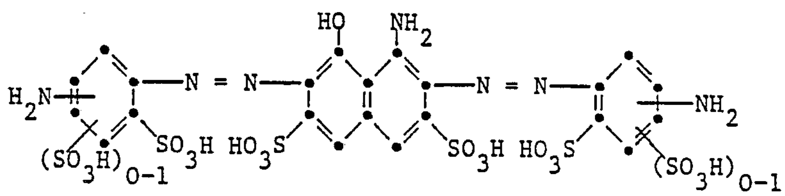

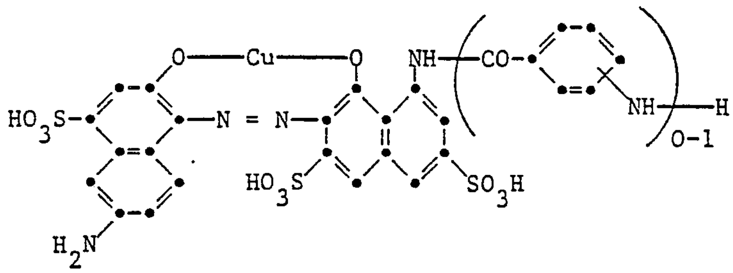

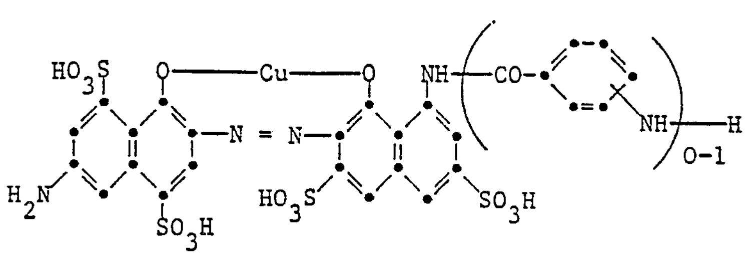

(Fortsetzung)

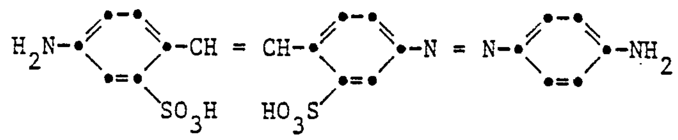

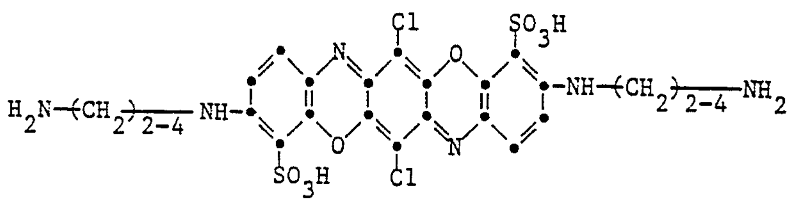

In den oben aufgeführten Formeln bedeuten die Reste $R_5$ bis $R_{10}$ und $R_{17}$ bis $R_{20}$ Wasserstoff oder $C_{1-4}$-Alkyl, und die Reste $R_3$, $R_4$ und $R_{11}$ bis $R_{16}$ Wasserstoff, $C_{1-4}$-Alkyl, $C_{1-4}$-Alkoxy, $C_{1-4}$-Alkanoylamino, Ureido, oder Halogen, wobei die Reste $R_3$, $R_4$, ... etc., die zu ein und derselben Formel gehören, voneinander unabhängig sind. Vorzugsweise bedeuten die Reste $R_5$ bis $R_{10}$ und $R_{17}$ die $R_{20}$ Wasserstoff, Methyl oder Aethyl, und die Reste $R_3$, $R_4$ und $R_{11}$ bis $R_{16}$ Wasserstoff, Methyl, Aethyl, Methoxy, Aethoxy, Acetylamino, Ureido oder Chlor. Die aromatischen Ringe in den obigen Farbstoffen können weitersubstituiert sein, die Benzolringe vor allem durch Methyl, Methoxy, Aethoxy, Carboxy, Acetylamino oder Chlor, und die Naphthalinringe insbesondere durch Methoxy, Carboxy, Acetylamino, Nitro oder Chlor ; gleiches gilt für die Anthrachinone, Dioxazine usw. Vorzugsweise sind die Benzolringe nicht weitersubstituiert. Als Diazokomponenten werden in diesem Falle vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure verwendet.

Als Diazo- und Kupplungskomponenten seien einzeln genannt :

Diazokomponenten :

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothio-p-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-m-7- oder 8-sulfonsäure, 2-Aminonaphthalin-3,6- oder -5,7-disulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-6-sulfonsäure, 2-Amino-1-hydroxynaphthalin-4,8-disulfonsäure, 4-Aminoazobenzol-3,4′-disulfonsäure, 3-Methoxy-4-amino-6-methylazobenzol-2′,4′-disulfonsäure, 3-Methoxy-4-amino-6-methylazobenzol-2′,5′-disulfonsäure, 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diaminobenzol-2-methylbenzol, 4,4'-Diaminodiphenyloxid, 4,4'-Diaminodiphenylharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z. B. 1-Acetylamino-3-aminobenzol-4-sulfonsäure oder 1-Acetylamino-4-aminobenzol-3-sulfonsäure.

Aromatische Amine, die als Diazokomponenten zur Herstellung der Mono- oder Polyazofarbstoffe dienen können, und die eine Vinylsulfonylgruppe oder einen äquivalenten Reaktivrest enthalten, sind z. B.:

1-Amino-4-β-sulfatoäthylsulfonylbenzol, 1-Amino-4-β-thiosulfatoäthylsulfonylbenzol, 1-Amino-4-vinylsulfonylbenzol, 1-Amino-4-β-chloräthylsulfonylbenzol, 1-Amino-3-β-sulfatoäthylsulfonylbenzol, 1-Amino-3-vinylsulfonylbenzol, 1-Amino-2-methoxy-5-β-sulfatoäthylsulfonylbenzol, 1-Amino-2-methoxy-5-β-thiosulfatoäthylsulfonylbenzol, 1-Amino-2-methoxy-5-vinylsulfonylbenzol, 1-Amino-4-methoxy-3-β-sulfatoäthylsulfonylbenzol, 1-Amino-4-methoxy-3-β-vinylsulfonylbenzol, 1-Amino-2,5-dimethoxy-4-β-sulfatoäthylsulfonylbenzol, 1-Amino-2,5-dimethoxy-4-vinylsulfonylbenzol, 1-Amino-2-methoxy-4-β-sulfatoäthylsulfonyl-5-methylbenzol, 1-Amino-2-methoxy-4-vinylsulfonyl-5-methylbenzol, 1-Amino-3-β-sulfatoäthylsulfonyl-6-carboxybenzol, 1-Amino-3-vinylsulfonyl-6-carboxybenzol, 1-Amino-4-β-sulfatoäthylsulfonylbenzol-2-sulfonsäure, 1-Amino-4-vinylsulfonylbenzol-2-sulfonsäure, 1-Amino-5-vinylsulfonylbenzol-2,4-disulfonsäure, 1-Amino-2-hydroxy-5-β-sulfatoäthylsulfonylbenzol, 1-Amino-2-hydroxy-4-β-sulfatoäthylsulfonylbenzol, 1-Amino-2-hydroxy-5-β-sulfatoäthylsulfonylbenzol-3-sulfonsäure, 1-Amino-2-brom-4-β-sulfatoäthylsulfonylbenzol, 1-Amino-2,6-dichlor-4-β-sulfatoäthylsulfonylbenzol, 1-Amino-2,4-di-(β-sulfatoäthylsulfonyl)-benzol, 1-Amino-2,4-di-(β-sulfatoäthylsulfonyl)-5-chlorbenzol, 1-Amino-2,4-di-(β-thiosulfatoäthylsulfonyl)-5-chlorbenzol, 1-Amino-2,4-di-(vinylsulfonyl)-benzol, 1-Amino-2,4-di-(vinylsulfonyl)-5-chlorbenzol, 1-Amino-2,4-di-(β-acetoxyäthylsulfonyl)-benzol, 1-Amino-2,4-di-(β-acetoxyäthylsulfonyl)-5-chlorbenzol, 2-Amino-8-β-sulfatoäthylsulfonylnaphthalin, 2-Amino-6-β-sulfatoäthylsulfonylnaphthalin, 2-Amino-6-β-sulfatoäthylsulfonylnaphthalin-1-sulfonsäure, 2-Amino-8-β-sulfatoäthylsulfonylnaphthalin-6-sulfonsäure, 2-Amino-6,8-di-(β-sulfatoäthylsulfonyl)-naphthalin.

Kupplungskomponenten

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw.-2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure,

1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon,1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridon-(2), 1-Aethyl-3-cyan- oder -3-chlor-4-methyl-6-hydroxypyridon-(2), 1-Aethyl-3-3-sulfomethyl-4-methyl-6-hydroxypyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo-naphthalin-3,6-disulfonsäure, 1-Amino-8-hydroxy-2-(2',5'-disulfophenylazo)-naphthalin-3,6-disulfonsäure, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-N,N-di-β-hydroxyäthylaminobenzol, 1-Amino-3-N,N-di-β-sulfatoäthylaminobenzol, 1-Amino-3-N,N-di-β-hydroxyäthylamino-4-methoxybenzol, 1-Amino-3-N,N-di-β-sulfato-äthylamino-4-methoxybenzol, 1-Amino-3-sulfo-benzylamino-benzol, 1-Amino-3-sulfo-benzylamino-4-chlorbenzol, 1-Amino-3-N,N-di-sulfo-benzylaminobenzol.

Pyrimidine der Formel (10)

2,4,5,6-Tetrachlorpyrimidin, 2,4,5,6-Tetrafluorpyrimidin, 2,4,5,6-Tetrabrompyrimidin, 2,4,6-Trichlor-5-methylsulfinylpyrimidin, 2,4,6-Trifluor-5-methysulfinylpyrimidin, 2,4,6-Tribrom-5-methylsulfinylpyrimidin, 2,4,6-Trichlor-5-äthylsulfinylpyrimidin, 2,4,6-Trichlor-5-n-propylsulfinylpyrimidin, 2,4,6-Trichlor-5-n-butylsulfinylpyrimidin, 2,4,6-Trichlor-5-isopropylsulfinylpyrimidin, 2,4,6-Trichlor-5-tert.-butylsulfinylpyrimidin, 2,4,6-Trichlor-5-methylsulfonyl-pyrimidin, 2,4,6-Tribrom-5-methylsulfonyl-pyrimidin, 2,4,6-Trifluor-5-methylsulfonyl-pyrimidin, 2,4,6-Trichlor-5-äthylsulfonyl-pyrimidin, 2,4,6-Trichlor-5-isopropylsulfonyl-pyrimidin, 2,4,6-Trichlor-5-n-butylsulfonyl-pyrimidin, 2,4,6-Trichlor-5-chlormethylsulfonyl-pyrimidin, 2,4,6-Trichlor-5-β-chloräthylsulfonyl-pyrimidin, 2,4,6-Trichlor-5-trifluormethylsulfonyl-pyrimidin, 2,4,6-Trichlor-5-perfluorbutyl-sulfonyl-pyrimidin, 2,4,6-Trichlor-5-äthoxymethyl-sulfonyl-pyrimidin, 2,4,6-Trifluor-5-äthoxy-äthylsulfonyl-pyrimidin, 2,4,6-Tribrom-5-isopropoxymethyl-sulfonyl-pyrimidin, 2,4,6-Trichlor-5-benzylsulfonyl-pyrimidin, 2,4,6-Tribrom-5-benzylsulfonyl-pyrimidin, 2,4,6-Trifluor-5-benzylsulfonyl-pyrimidin, 2,4,6-Trichlor-5-phenetylsulfonyl-pyrimidin, 2,4-Dichlor-6-brom-5-methylsulfonyl-pyrimidin, 2,4-Dichlor-6-fluor-5-methylsulfonyl-pyrimidin, 2,4-Dichlor-6-fluor-5-methylsulfonyl-pyrimidin, 2-Chlor-4,6-difluor-5-methylsulfonyl-pyrimidin, 2-Chlor-4,6-dibrom-5-methylsulfonyl-pyrimidin, 2-Brom-4,6-difluor-5-methylsulfonyl-pyrimidin, 2-Chlor-4,6-difluor-5-äthylsulfonyl-pyrimidin, 2,4,6-Trichlor-5-carboxypyrimidin, 2,4,6-Trifluor-5-carboxy-pyrimidin, 2,4,6-Trichlor-5-cyanpyrimidin.

Bevorzugt ist das 2,4,6-Trifluor-5-methylsulfonylpyrimidin.

Amine der Formel (11)

1-Aminobenzol-2-, -3- oder -4-β-sulfatoäthylsulfon, 1-Aminobenzol-3-β-phosphatoäthylsulfon, 1-Amino-4-methylbenzol-3-β-sulfatoäthylsulfon, 1-Aminobenzol-3-β-chloräthylsulfon, 1-Amino-4-methoxybenzol-3-β-sulfatoäthylsulfon, 1-Aminobenzol-4-β-sulfatoäthylsulfon-2-sulfonsäure, 1-Aminobenzol-5-β-sulfatoäthylsulfon-2-sulfonsäure, 1-Aminobenzol-5-β-sulfatoäthylsulfon-2,4-disulfonsäure, 1-Aminonaphthalin-4-β-sulfatoäthylsulfon, 1-Amino-2,5-dimethoxybenzol-4-β-sulfatoäthylsulfon, 1-Aminobenzol-4-β-sulfatoäthylsulfon-2-carbonsäure, 1-Aminobenzol-5-β-sulfatoäthylsulfon-2-carbonsäure, 1-Amino-2-methoxybenzol-4-β-sulfatoäthylsulfon, 1-Amino-2-chlorbenzol-4-β-sulfatoäthylsulfon, 1-Amino-2-methoxybenzol-5-β-sulfatoäthylsulfon, 2-Aminonaphthalin-8-β-sulfatoäthylsulfon, 2-Aminonaphthalin-8-β-sulfatoäthylsulfon-6-sulfonsäure, 1-Amino-2,5-dimethoxybenzol-4-vinylsulfon, 1-Amino-2-methoxy-5-methylbenzol-4-β-sulfatoäthylsulfon, 1-Amino-2,5-diäthoxybenzol-4-β-sulfatoäthylsulfon, 1-Amino-2-brombenzol-4-β-sulfatoäthylsulfon, 1-Amino-2-brombenzol-4-vinylsulfon, 1-Aminobenzol-5-vinylsulfon-2,4-disulfonsäure, 1-Aminobenzol-5-β-phosphatoäthylsulfon-2,4-disulfonsäure, 1-Aminobenzol-5-β-chloräthylsulfon-2,4-disulfonsäure, 2-Aminonaphthalin-8-β-phosphatoäthylsulfon-6-sulfonsäure, 2-Aminonaphthalin-8-vinylsulfon-6-sulfonsäure, 1-Amino-2-methoxy-5-methylbenzol-4-β-chloräthylsulfon, 2-Aminophenol-4-β-sulfatoäthylsulfon, 1-Aminobenzol-3- oder -4-vinylsulfon, 1-Amino-2-hydroxybenzol-4-β-sulfatoäthylsulfon, 1-Aminobenzol-5-vinylsulfon-2-sulfonsäure, 3-(N-Methyl-β-sulfato-äthylsulfonylamino)-1-aminobenzol, 3-(N-Aethyl-β-sulfato-äthylsulfonylamino)-1-aminobenzol, 3-β-Sulfato-äthylsulfonylamino-1-aminobenzol.

Bevorzugt ist das 1-Aminobenzol-3-β-sulfatoäthylsulfon.

β-(β-Chloräthylsulfonyl)-äthylamin, β-(β-Bromäthylsulfonyl)-äthylamin, β-Vinylsulfonyl-äthylamin, γ-(β-Chloräthylsulfonyl)-propylamin, α-(β-Chloräthylsulfonyl)-isopropylamin, δ-(β-Chloräthylsulfonyl)-butylamin, β-(β-Chloräthylsulfonyl)-isobutylamin, ε-(β-Chloräthylsulfonyl)-pentylamin,
β-(β-Chloräthyl-sulfonyl)-hexyl-amin,
N-Methyl-N-β-(β-chloräthyl-sulfonyl)-äthyl-amin,
N-Aethyl-N-β-(β-chloräthyl-sulfonyl)-äthyl-amin,
N-Propyl-N-β-(β-chloräthyl-sulfonyl)-äthyl-amin,
N-Butyl-N-β-(β-chloräthyl-sulfonyl)-äthyl-amin,
N-Pentyl-N-β-(β-chloräthyl-sulfonyl)-äthyl-amin,
N-Hexyl-N-β-(β-chloräthyl-sulfonyl)-äthyl-amin,
N-Nonyl-N-β-(β-chloräthyl-sulfonyl)-äthyl-amin,
N-Dodecyl-N-β-(β-chloräthyl-sulfonyl)-äthyl-amin,
N-Hexadecyl-N-β-(β-chloräthyl-sulfonyl)-äthyl-amin,
N-Octadecyl-N-β-(β-chloräthyl-sulfonyl)-äthyl-amin,
N-Carboxymethyl-N-β-(β-bromäthyl-sulfonyl)-äthyl-amin,
N-Sulfatomethyl-N-β-(β-chloräthyl-sulfonyl)-äthyl-amin,
N-β-Carboxyäthyl-N-γ-(β-chloräthyl-sulfonyl)-propyl-amin,
N-β-Sulfatoäthyl-N-γ-(β-chloräthyl-sulfonyl)-propyl-amin,
N-β-Sulfatoäthyl-N-δ-(β-chloräthyl-sulfonyl)-butyl-amin,
N-β-Aethoxyäthyl-N-δ-(β-chloräthyl-sulfonyl)-butyl-amin,
N-γ-Chlorpropyl-N-β-(β-chloräthyl-sulfonyl)-äthyl-amin,
N-Phenyl-N-β-(β-chloräthyl-sulfonyl)-äthyl-amin,
N-p-Chlorphenyl-N-β-(β-chloräthyl-sulfonyl)-äthyl-amin,
N-o-Methylphenyl-N-β-(β-chloräthyl-sulfonyl)-äthyl-amin,
N-p-Methoxyphenyl-N-β-(β-chloräthyl-sulfonyl)-äthyl-amin,
N-m-Sulfophenyl-N-β-(β-chloräthyl-sulfonyl)-äthyl-amin,
N-p-Sulfophenyl-N-β-(β-chloräthyl-sulfonyl)-äthyl-amin,
Bis-[β-(β-chloräthyl-sulfonyl)-äthyl]-amin,
Bis-[β-(β-bromäthyl-sulfonyl)-äthyl]-amin,
Bis-[γ-(β-chloräthyl-sulfonyl)-propyl]-amin,
Bis-[δ-(β-chloräthyl-sulfonyl)-butyl]-amin,
Bis-(β-vinyl-sulfonyl-äthyl)-amin.

Bevorzugt sind die Amine von niederem Molekulargewicht wie das β-(β-Chloräthyl-sulfonyl)-äthyl-amin und sein N-Methylderivat. Bevorzugt ist ferner das Bis-[β-(β-chloräthyl-sulfonyl)äthyl]-amin.

β-(β-Hydroxyäthyl-sulfonyl)-äthyl-amin (2-Tauryläthanol),
γ-(β-Hydroxyäthyl-sulfonyl)-propyl-amin,
α-(β-Hydroxyäthyl-sulfonyl)-isopropyl-amin,
δ-(β-Hydroxyäthyl-sulfonyl)-butyl-amin,
β-(β-Hydroxyäthyl-sulfonyl)-isobutyl-amin,
ε-(β-Hydroxyäthyl-sulfonyl)-pentyl-amin,
β-(β-Hydroxyäthyl-sulfonyl)-hexyl-amin,
N-Methyl-N-β-(β-hydroxyäthyl-sulfonyl)-äthyl-amin,
N-Aethyl-N-β-(β-hydroxyäthyl-sulfonyl)-äthyl-amin,
N-Propyl-N-β-(β-hydroxyäthyl-sulfonyl)-äthyl-amin,
N-Butyl-N-β-(β-hydroxyäthyl-sulfonyl)-äthyl-amin,
N-Pentyl-N-β-(β-hydroxyäthyl-sulfonyl)-äthyl-amin,
N-Hexyl-N-β-(β-hydroxyäthyl-sulfonyl)-äthyl-amin,
N-Nonyl-N-β-(β-hydroxyäthyl-sulfonyl)-äthyl-amin,
N-Dodecyl-N-β-(β-hydroxyäthyl-sulfonyl)-äthyl-amin,
N-Hexadecyl-N-β-(β-hydroxyäthyl-sulfonyl)-äthyl-amin,
N-Oktadecyl-N-β-(β-hydroxyäthyl-sulfonyl)-äthyl-amin,
N-Carboxymethyl-N-β-(β-hydroxyäthyl-sulfonyl)-äthyl-amin,
N-Sulfatomethyl-N-β-(β-hydroxyäthyl-sulfonyl)-äthyl-amin,
N-β-Carboxyäthyl-N-γ-(β-hydroxyäthyl-sulfonyl)-propyl-amin,
N-β-Sulfatoäthyl-N-γ-(β-hydroxyäthyl-sulfonyl)-propyl-amin,
N-β-Sulfatoäthyl-N-δ-(β-hydroxyäthyl-sulfonyl)-butyl-amin,
N-β-Aethoxyäthyl-N-δ-(β-hydroxyäthyl-sulfonyl)-butyl-amin,
N-γ-Chlorpropyl-N-β-(β-hydroxyäthyl-sulfonyl)-äthyl-amin,
N-Phenyl-N-β-(β-hydroxyäthyl-sulfonyl)-äthyl-amin,
N-p-Chlorphenyl-N-β-(β-hydroxyäthyl-sulfonyl)-äthyl-amin,
N-o-Methylphenyl-N-β-(β-hydroxyäthyl-sulfonyl)-äthyl-amin,
N-p-Methoxyphenyl-N-β-(β-hydroxyäthyl-sulfonyl)-äthyl-amin,

N-m-Sulfophenyl-N-β-(β-hydroxyäthyl-sulfonyl)-äthyl-amin,
N-p-Sulfophenyl-N-β-(β-hydroxyäthyl-sulfonyl)-äthyl-amin,
Bis-[β-(β-hydroxyäthyl-sulfonyl)-äthyl]-amin,
Bis-[γ-(β-hydroxyäthyl-sulfonyl)-propyl]-amin,
Bis-[δ-(β-hydroxyäthyl-sulfonyl)-butyl]-amin,
sowie die entsprechenden sulfatierten Verbindungen.

Bevorzugt sind die Amine von niederem Molekulargewicht, wie das β-(β-hydroxyäthyl-sulfonyl)-äthylamin und sein N-Methylderivat. Bevorzugt ist ferner das Bis-[β-(β-hydroxyäthyl-sulfonyl)-äthyl]-amin, sowie die entsprechenden sulfatierten Verbindungen.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Kondensation der Pyrimidine der Formel (10) mit den Diazokomponenten und den Kupplungskomponenten und mit den Aminen bzw. mit acylierbaren Monoazo- oder Disazo-Zwischenprodukten bzw. mit den aminogruppenhaltigen Farbstoffen erfolgen vorzugsweise in wässriger Lösung oder Suspension, bei niedriger Temperatur und bei schwach saurem, neutralem bis schwach alkalischem pH-Wert. Vorteilhaft wird der bei der Kondensation freiwerdende Halogenwasserstoff laufend durch Zugabe wässriger Alkalihydroxyde, -carbonate oder -bicarbonate neutralisiert.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z. B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen und Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d. h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z. B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

In der EP-A-0 084 914 sind Disazofarbstoffe beschrieben, welche einen Fluor-chlor-pyrimidin-Rest und einen Sulfatäthylsulfonyl- oder Vinylsulfonyl-Rest je in einer Endstellung an das Farbstoffmolekül gebunden enthalten.

In der CH-A-472 478 sind Azofarbstoffe beschrieben, welche einen Chlorpyrimidinrest und einen γ-Chlor-β-hydroxy-propyloxy-phenylamino-Rest, der an den Pyrimidinring gebunden ist, enthalten.

Die nachfolgenden Beispiele dienen zur Erläuterung der Erfindung. Die Temperatur sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1

5,45 Teile des Farbstoffes der Formel

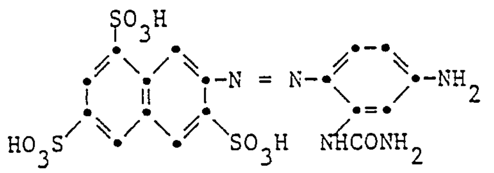

werden in 100 Teilen Wasser neutral gelöst und mit 50 Teilen Eis versetzt. Zur eiskalten Lösung gibt man hierauf unter kräftigem Rühren eine Lösung von 2,12 Teilen 2,4,6-Trifluor-5-methylsulfonyl-pyrimidin in 20 Teilen Aceton. Durch Eintropfen von ca. 11 Teilen 1-n Natriumhydroxydlösung wird das pH der Lösung wieder auf 7 gestellt. Nach der vollständigen Acylierung der Aminogruppe versetzt man die Lösung der Difluorverbindung mit einer neutralen Lösung von 2,81 Teilen 1-Aminobenzol-3-β-sulfatoäthylsulfon in 50 Teilen Wasser, erwärmt auf 30 bis 35° und hält das pH der Lösung durch Eintropfen von 1-n Natriumhydroxydlösung zwischen 5 und 6. Sobald die zweite Kondensation beendet ist, wird der gebildete Monofluorpyrimidinfarbstoff mit Kaliumchlorid ausgesalzen, abfiltriert und im Vakuum bei 40 bis 50° getrocknet.

Der so erhaltene Farbstoff färbt Baumwolle in goldgelben Tönen.

Beispiel 2

5,53 Teile des Farbstoffes der Formel

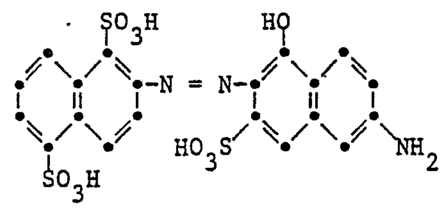

werden in 100 Teilen Wasser neutral gelöst und mit 50 Teilen Eis versetzt. Zur eiskalten Lösung gibt man hierauf unter kräftigem Rühren eine Lösung von 2,12 Teilen 2,4,6-Trifluor-5-methylsulfonyl-pyrimidin in 20 Teilen Aceton. Durch Eintropfen von ca. 11 Teilen 1-n Natriumhydroxydlösung wird das pH der Lösung wieder auf 7 gestellt. Nach vollständiger Acylierung der Aminogruppe gibt man zur Lösung des Difluorpyrimidinfarbstoffes 2,07 Teile β-(β-Chloräthylsulfonyl)-äthyl-amin-hydrochlorid, erwärmt auf 30 bis 35° und hält das pH der Lösung durch Zutropfen von ca. 9 Teilen 1-n Natriumhydroxydlösung zwischen 5 und 6. Nach erfolgter Kondensation wird der gebildete Farbstoff durch Zugabe von 25 Vol.% Kochsalz ausgesalzen, abfiltriert und im Vakuum bei 40 bis 50° getrocknet.

Der so erhaltene Farbstoff färbt Baumwolle in orangen Tönen.

Beispiel 3

Zu einer neutralen Lösung von 3,61 Teilen Bis-[β-(β-chloräthyl-sulfonyl)-äthyl]-amin-hydrochlorid in 100 Teilen Eiswasser gibt man unter kräftigem Rühren eine Lösung von 2,12 Teilen 2,4,6-Trifluor-5-methylsulfonyl-pyrimidin in 20 Teilen Aceton und stellt das pH der Lösung durch Zutropfen von ca. 10 Teilen 1-n Natriumhydroxydlösung wieder auf 7. Zur so erhaltenen neutralen Lösung des primären Kondensationsproduktes gibt man hierauf eine neutrale Lösung von 4,38 Teilen des Farbstoffes der Formel

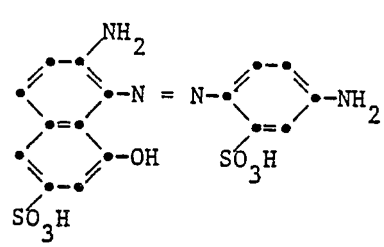

erwärmt das Reaktionsgemisch auf 30 bis 35° und hält das pH der Lösung durch Zutropfen von ca. 10 Teilen 1-n Natriumhydroxydlösung zwischen 5 und 6. Nach erfolgter Acylierung wird der entstandene Monofluorpyrimidinfarbstoff mit Kochsalz ausgesalzen, abfiltriert und im Vakuum bei 40 bis 50° getrocknet.

Der so erhaltene Farbstoff färbt Baumwolle in blaustichig roten Tönen.

Durch Kondensation von 2,4,6-Trifluor-5-methylsulfonyl-pyrimidin mit den aminogruppenhaltigen Farbstoffen der Kolonne I und den Aminen der Kolonne II nach den Angaben der Beispiele 1 bis 3 erhält man weitere Monofluorpyrimidinfarbstoffe, die Baumwolle in den in Kolonne III angegebenen Tönen färben.

| I | II | III |
|---|---|---|
| 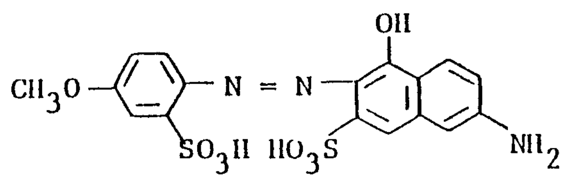 | 1-Aminobenzol-3-β-sulfatoäthylsulfon | scharlach |
| " | 1-Aminobenzol-4-β-sulfatoäthylsulfon | " |
| 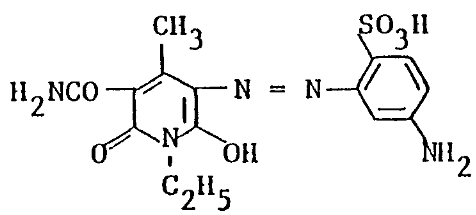 | " | grünstichig gelb |
| " | β-(β-Chloräthyl-sulfonyl)-äthylamin | " |
| 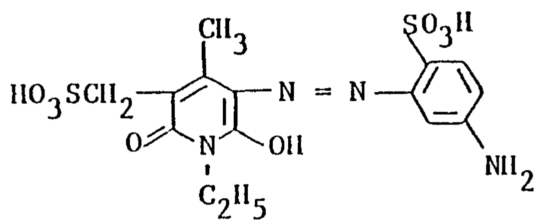 | " | " |

(Fortsetzung)

| I | II | III |
|---|---|---|
| 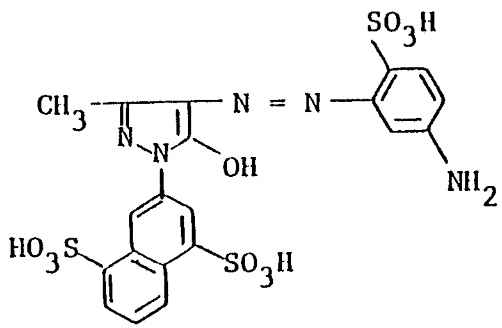 | 1-Aminobenzol-3-β-sulfatoäthylsulfon | gelb |
| " | β-(β-Chloräthyl-sulfonyl)-äthylamin | " |
| 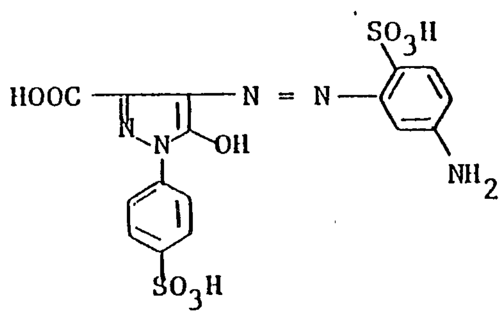 | β-(β-Chloräthyl-sulfonyl)-propyl-amin | " |
| " | Bis-[β-(β-chlor-äthylsulfonyl)-äthyl]-amin | " |

(Fortsetzung)

| I | II | III |
|---|---|---|
| 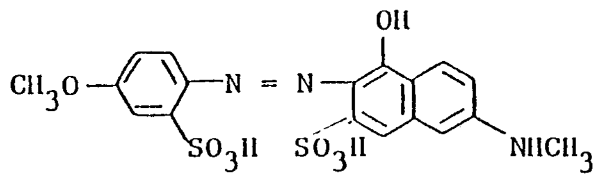 | β-(β-Sulfatoäthyl-sulfonyl)-äthylamin | scharlach |
| 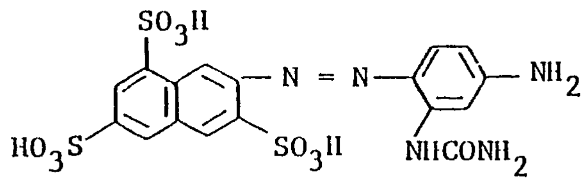 | " | goldgelb |
| 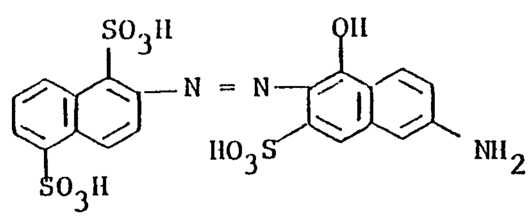 | β-Vinylsulfonyl-äthylamin | orange |
| " | β-(β-Chloräthyl-sulfonyl)-äthylamin | " |
| 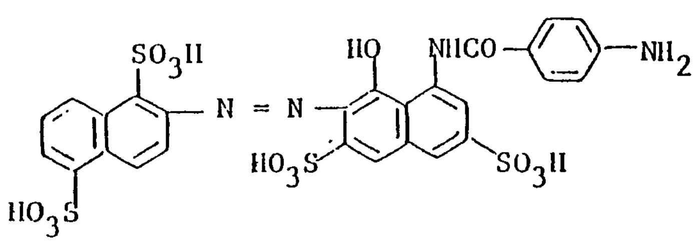 | " | blaustichig rot |

(Fortsetzung)

| I | II | III |
|---|---|---|
| 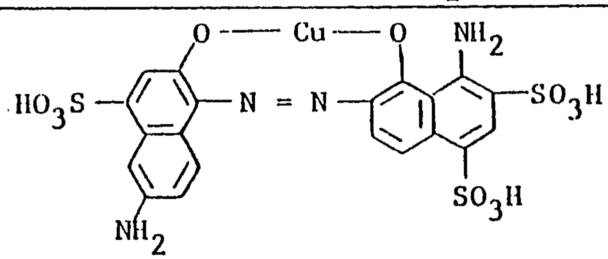 | β-(β-Chloräthyl-sulfonyl)-äthylamin | blau |
| 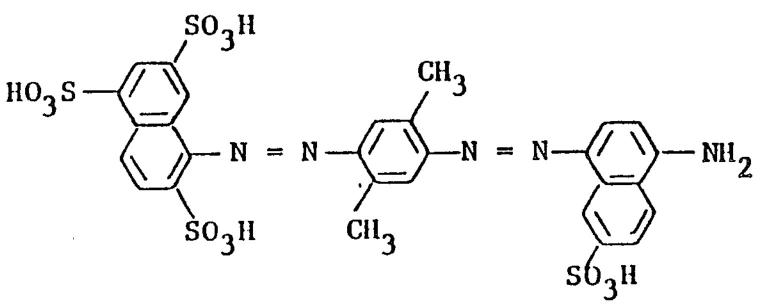 | Bis-[β-(β-chloräthyl-sulfonyl)-äthyl]-amin | braun |
| 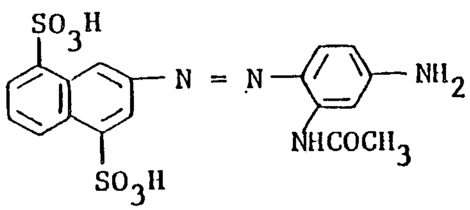 | β-(β-Sulfatoäthyl-sulfonyl)-äthylamin | gelb |
| 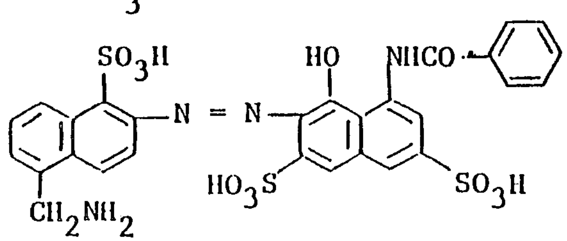 | N-Methyl-N-β-(β-chloräthyl-sulfonyl)-äthylamin | blaustichig rot |

(Fortsetzung)

| I | II | III |
|---|---|---|
| 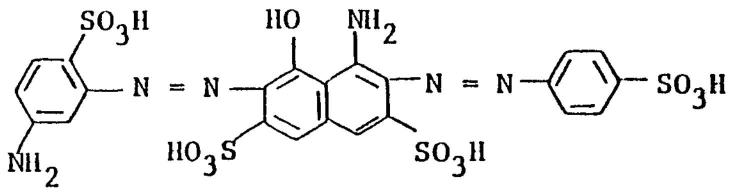 | β-(β-Sulfato-äthyl-sulfonyl)-äthyl-amin | dunkelblau |
| 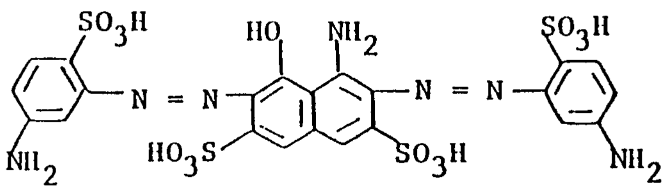 | " | grünstichig marineblau |
| 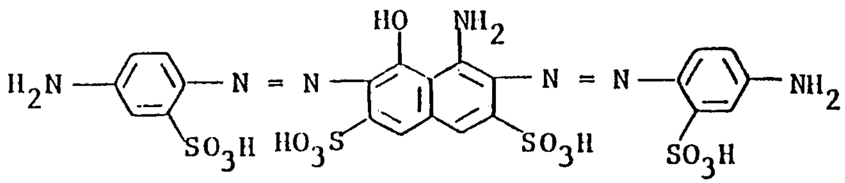 | " | grünblau |
| 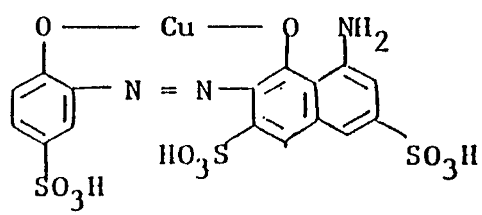 | " | violett |
| 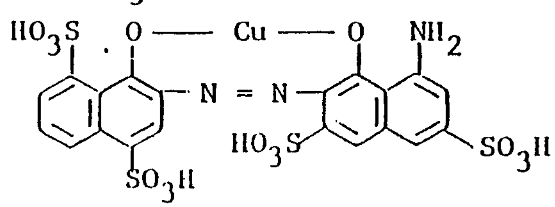 | β-Vinyl-sulfonyl-äthylamin | blau |

(Fortsetzung)

| I | II | III |
|---|---|---|
| 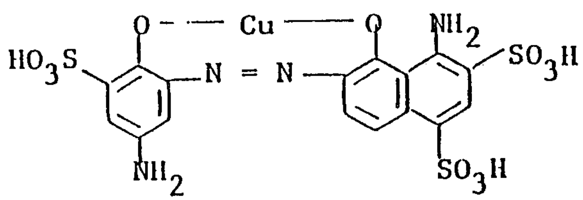 | 1-Aminobenzol-3-vinylsulfon | rotstichig blau |
| 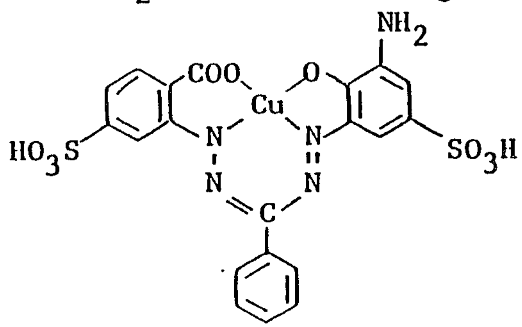 | 1-Aminobenzol-4-vinylsulfon | blau |
| 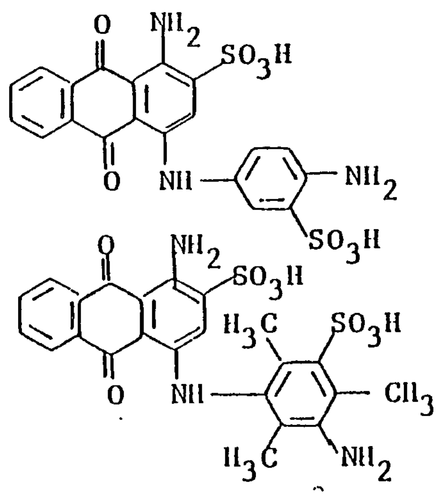 | β-(β-Chloräthylsulfonyl)-äthylamin | grünstichig blau |
| | " | königsblau |

(Fortsetzung)

| I | II | III |
|---|---|---|
| 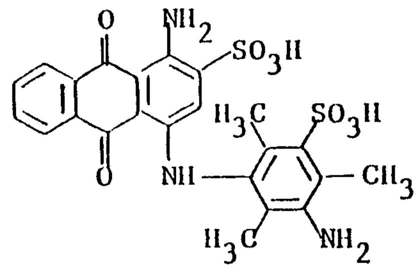 | β-(β-Thiosulfato-äthylsulfonyl)-äthylamin | königsblau |
| " | β-(β-Acetoxyäthyl-sulfonyl)-äthyl-amin | " |
| 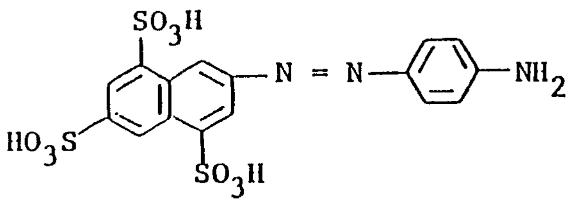 | " | gelb |
| 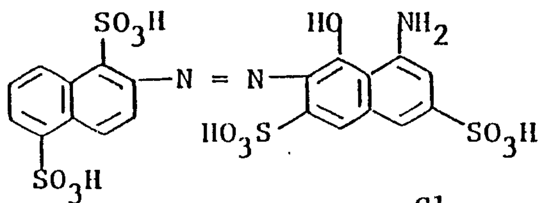 | " | blaustichig rot |
| 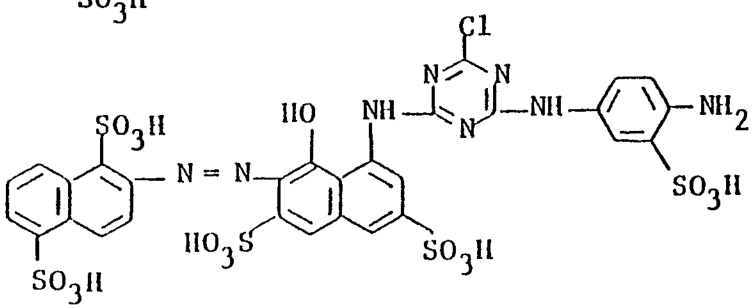 | β-(β-Sulfatoäthyl-sulfonyl)-äthyl-amin | " |

(Fortsetzung)

| I | II | III |
|---|---|---|
| 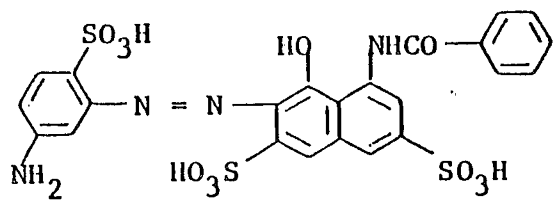 | β-(β-Sulfatoäthyl-sulfonyl)-äthylamin | blaustichig rot |
| 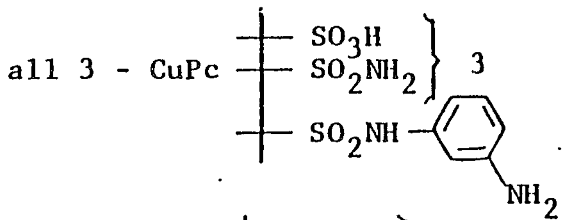 | " | türkis |
| 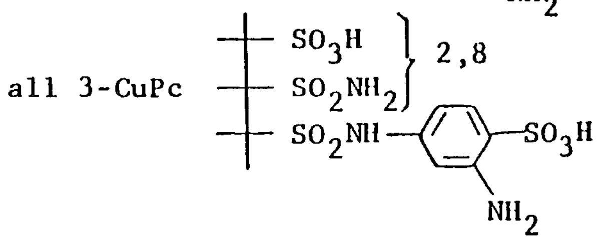 | " | " |
| 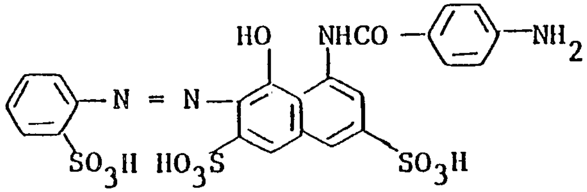 | β-(β-Acetoxyäthyl-sulfonyl)-äthylamin | rot |
| 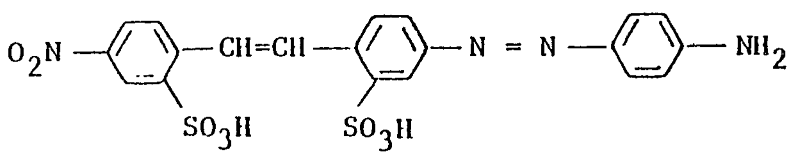 | " | gelb |

(Fortsetzung)

| I. | II | III |
|---|---|---|
| 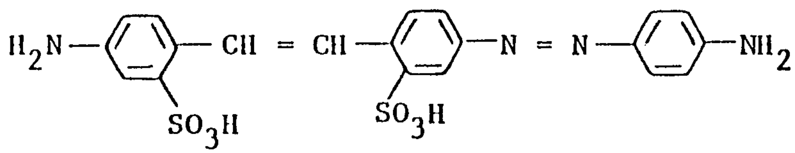 | β-(β-Chloräthyl-sulfonyl)-äthyl-amin | gelb |
| 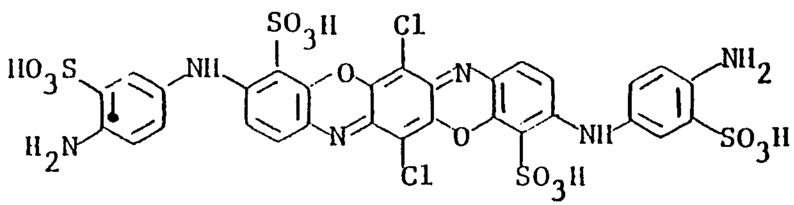 | β-(β-Sulfatoäthyl-sulfonyl)-äthyl-amin | blau |
| 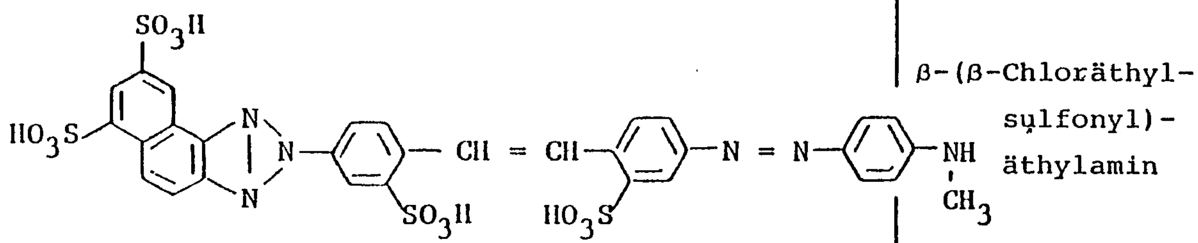 | β-(β-Chloräthyl-sulfonyl)-äthylamin | gelb |
| 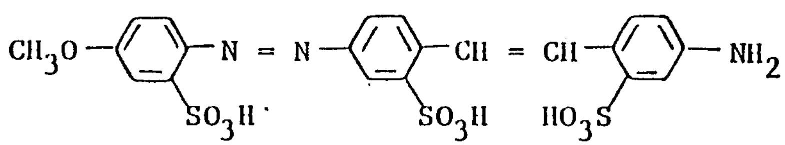 | 1-Aminobenzol-4-β-sulfatoäthyl-sulfon | gelb |
| 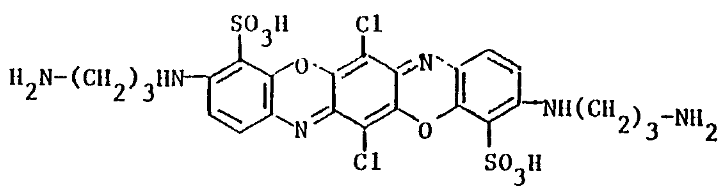 | " | blau |

(Fortsetzung)

| I | II | III |
|---|---|---|
| 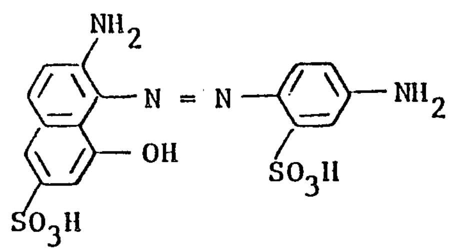 | β-(β-Sulfatoäthyl-sulfonyl)-äthylamin | blaustichig rot |
| 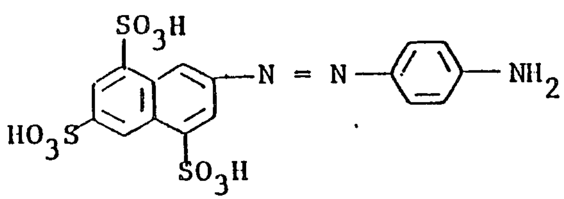 | " | gelb |

Beispiel 4

Zu einer neutralen Lösung von 50,64 Teilen des Aminoazofarbstoffes der Formel

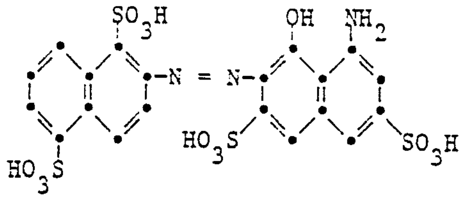

in 900 Teilen Wasser gibt man bei Zimmertemperatur unter kräftigem Rühren eine Lösung von 21 Teilen 2,4,6-Trichlor-5-methylsulfonyl-pyrimidin in 80 Teilen Aceton und lässt über Nacht reagieren. Anderntags wird die Lösung mit 2-n Natriumhydroxydlösung auf pH 7 gestellt und klärfiltriert. Durch Zugabe von 20 Vol.% Kochsalz wird der Farbstoff der Formel

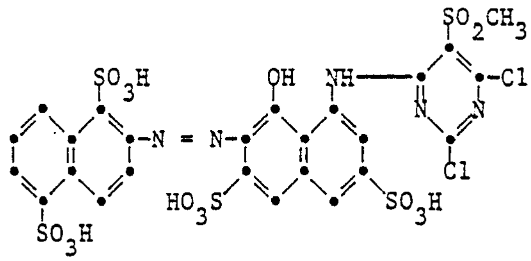

ausgesalzen und abfiltriert. Die so erhaltene Farbstoffpaste wird in 600 Teilen Wasser gelöst und langsam mit einer Lösung von 16,3 Teilen β-(β-Chloräthylsulfonyl)-äthylamin-hydrochlorid in 60 Teilen Wasser versetzt, wobei das pH der Lösung mit 1-n Natriumhydroxydlösung zwischen 7 und 8 gehalten wird.

Nach erfolgter Amidierung wird der Farbstoff der Formel

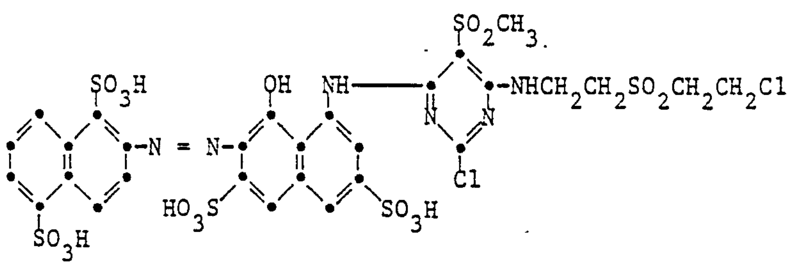

mit Kaliumchlorid ausgesalzen, abfiltriert und im Vakuum bei 40 bis 50 °C getrocknet. Der so erhaltene Farbstoff färbt Baumwolle im Kaltverweilverfahren in blaustichig roten Tönen.

Durch Kondensation von 2,4,6-Trichlor-5-methylsulfonyl-pyrimidin mit den aminogruppenhaltigen Farbstoffen der Kolonne I und den Aminen der Kolonne II nach den Angaben des obigen Beispiels erhält man weitere Farbstoffe, die Baumwolle in den in Kolonne III angegebenen Tönen färben.

(Siehe Tabellen Seite 32 ff.)

| I | II | III |
|---|---|---|
| 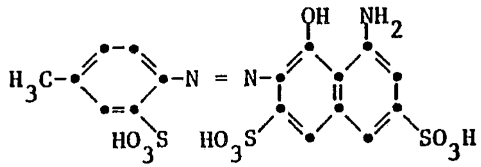 | β-(β-Chloräthyl-sulfonyl)-äthylamin | blaustichig rot |
| 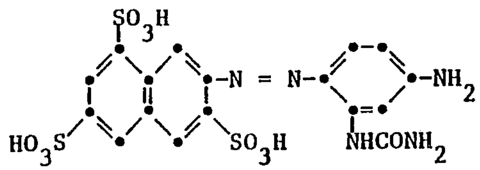 | do | goldgelb |
| 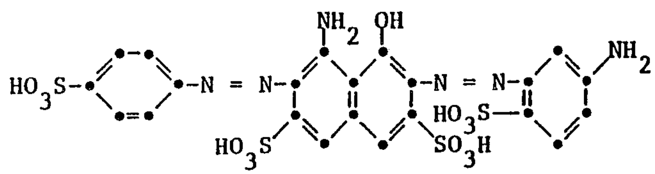 | do | marineblau |
| 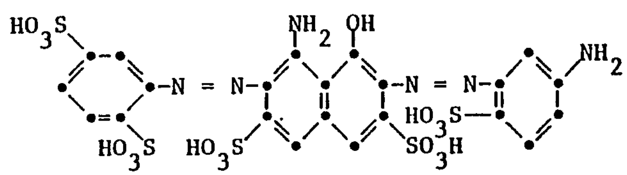 | do | do |
| 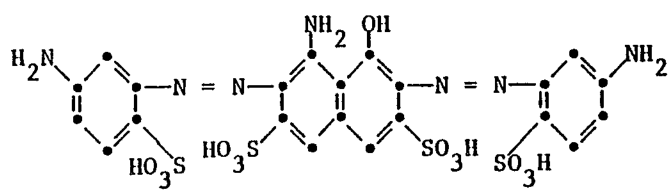 | do | do |

(Fortsetzung)

| I | II | III |
|---|---|---|
| 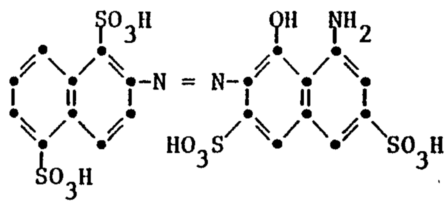 | Bis-[β-(β-chloräthyl)-sulfonyl)-äthyl]-amin | blaustichig rot |
| do | 1-Aminobenzol-3-β-sulfatoäthylsulfon | do |
| 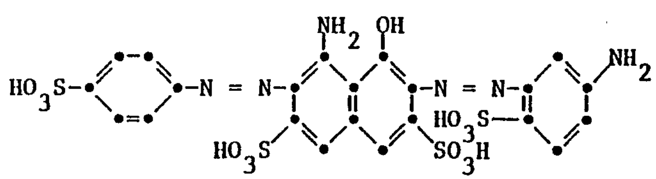 | do | marineblau |

Beispiel 5

12,76 Teile 1-Amino-8-hydroxynaphthalin-3,6-disulfonsäure werden in 500 Teilen Wasser bei Zimmertemperatur angeschlämmt und mit Natronlauge auf pH 6 gestellt. Die erhaltene Lösung wird mit einer Lösung von 10,5 Teilen 2,4,6-Trichlor-5-methylsulfonyl-pyrimidin in 40 Teilen Aceton versetzt und über Nacht kräftig gerührt. Anderntags wird die Kupplungskomponente der Formel

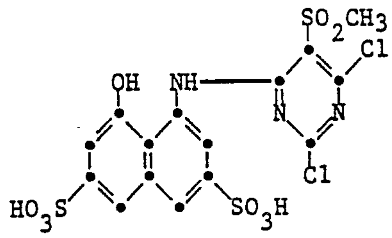

klärfiltriert und langsam zu einer Suspension des Diazoniumsalzes gegeben, die in üblicher Weise aus 11,24 Teilen 1-Aminobenzol-4-β-sulfatoäthylsulfon, 20 Teilen 2-n Natriumnitritlösung und 12 Teilen 10-n Salzsäure hergestellt wurde. Durch Zutropfen von 1-n Natriumhydroxydlösung wird der pH-Wert des Kupplungsgemisches langsam auf 5 gestellt. Nach beendeter Kupplung wird die Verbindung der Formel

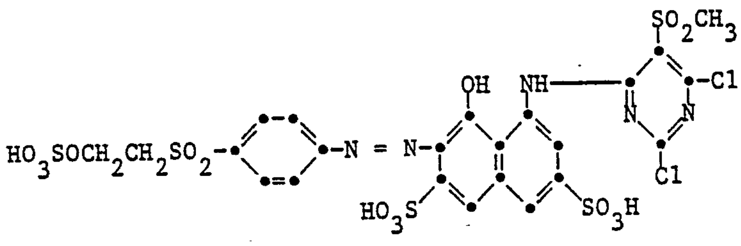

mit 25 Vol.% Kochsalz ausgesalzen und abfiltriert.

Die erhaltene Farbstoffpaste wird hierauf in 300 Teilen Wasser gelöst und langsam mit einer Lösung aus 8,32 Teilen β-(β-Chloräthylsulfonyl)-äthylamin-hydrochlorid in 30 Teilen Wasser versetzt, wobei durch Zutropfen von 1-n Natriumhydroxydlösung das pH bei 7 bis 8 gehalten wird. Nach vollständiger Amidierung wird der Farbstoff der Formel

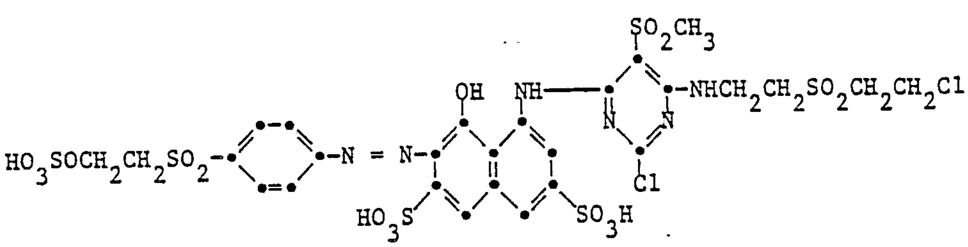

bei 40 °C zur Trockne eingedampft.

Der so erhaltene Farbstoff färbt Baumwolle nach dem Kaltverweilverfahren in blaustichig roten Tönen.

Beispiel 6

28,91 Teile des Amins der Formel

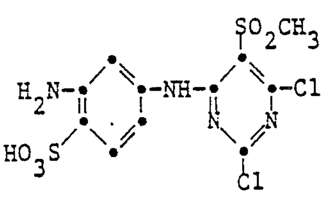

werden in üblicher Weise mit Nitrit und Salzsäure diazotiert und bei pH 3 auf 22,33 Teile 1-Amino-8-hydroxynaphthalin-3,6-disulfonsäure gekuppelt. Durch Zugabe von 10 Vol.% Kochsalz wird der rote Monoazofarbstoff der Formel

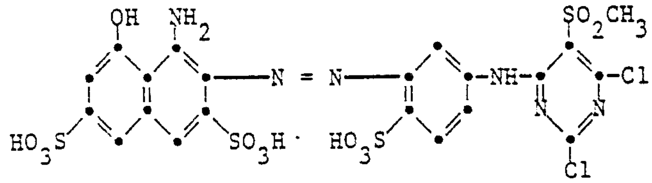

isoliert.

Die erhaltene Farbstoffpaste wird in 500 Teilen Wasser aufgeschlämmt und langsam zu einer Suspension des Diazoniumsalzes gegeben, die in üblicher Weise aus 19,67 Teilen 1-Aminobenzol-4-β-sulfatoäthylsulfon, 35 Teilen 2-n Natriumnitritlösung und 18 Teilen 10-n Salzsäure hergestellt wurde. Durch Zutropfen von 1-n Natriumhydroxydlösung wird der pH-Wert des Kupplungsgemisches langsam auf 7 gestellt. Durch Einstreuen von 15 Vol.% Kaliumchlorid wird der Disazofarbstoff der Formel

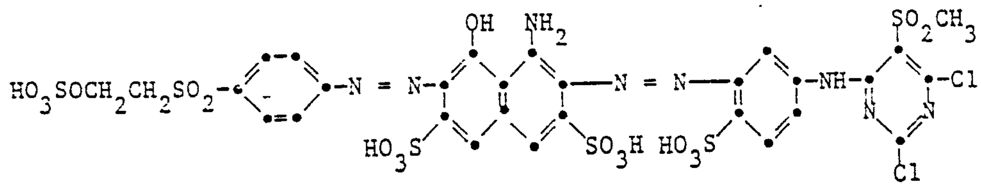

ausgesalzen und abfiltriert.

Die Amidierung dieses Produkts mit 14,56 Teilen β-(β-Chloräthylsulfonyl)-äthylamin-hydrochlorid führt schliesslich zum Farbstoff der Formel

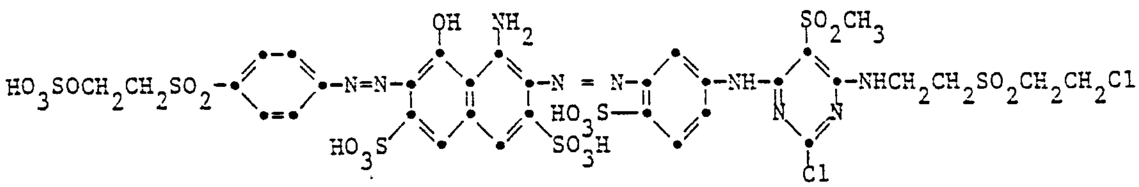

Der so erhaltene Farbstoff färbt Baumwolle nach dem Kaltverweilverfahren in marineblauen Tönen.

## Beispiel 7

Zu einer Lösung von 21,76 Teilen der Kupplungskomponente der Formel

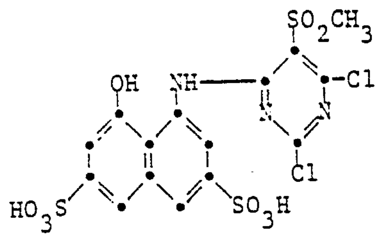

deren Herstellung in Beispiel 5 beschrieben ist, gibt man das Diazoniumsalz, das in üblicher Weise aus 15,38 Teilen des Amins der Formel

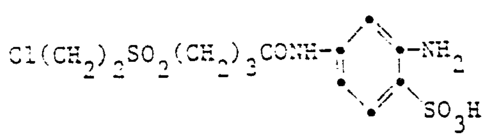

mit 20 Teilen 2-n Natriumnitritlösung und 12 Teilen 10-n Salzsäure hergestellt wurde. Durch Zutropfen von 2-N Natriumhydroxydlösung wird der pH-Wert des Kupplungsgemisches langsam auf 5 angehoben. Nach erfolgter Kupplung wird der Farbstoff der Formel

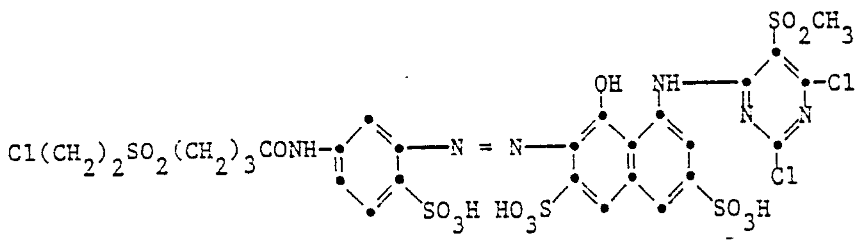

mit 15 Vol. % Kochsalz ausgesalzen und abfiltriert.

Hierauf wird die Farbstoffpaste in 500 Teilen Wasser mit Natronlauge neutralisiert und mit 8,32 Teilen β-(β-Chloräthylsulfonyl)-äthylaminhydrochlorid amidiert.

Der so erhaltene Farbstoff der Formel

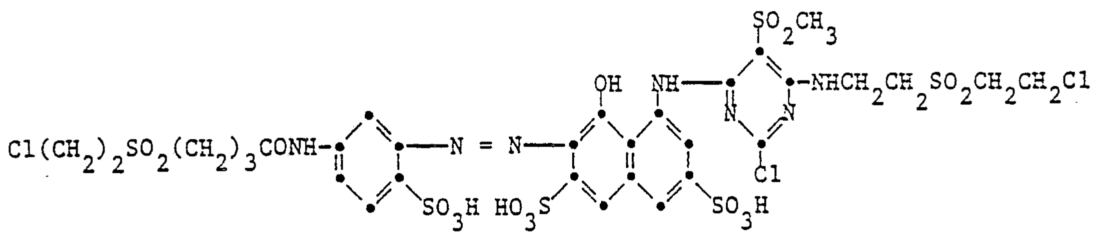

wird zur Trockne eingedampft und färbt Baumwolle nach dem Kaltverweilverfahren in roten Tönen.

Färbevorschrift I

2 Teile des gemäss Beispiel 1 erhaltenen Farbstoffes werden in 400 Teilen Wasser gelöst ; dazu gibt man 1 500 Teile einer Lösung, die pro Liter 53 g Natriumchlorid enthält. In dieses Färbebad geht man bei 40 °C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40 °C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst ; dazu gibt man 1 500 Teile einer Lösung, die pro Liter 53 g Natriumchlorid enthält. In dieses Färbebad geht man bei 35 °C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35 °C gehalten. Danach wird die Temperatur innerhalb von 20 Minuten auf 60 °C erhöht. Die Temperatur wird weitere 35 Minuten bei 60 °C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst ; dazu gibt man 1 400 Teile einer Lösung, die pro Liter 100 g Natriumsulfat enthält. In dieses Färbebad geht man bei 25 °C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60 °C erhöht. Die Temperatur wird weitere 90 Minuten auf 60 °C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20 °C Warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102 °C, spült, seift während einer Viertelstunde in einer 0,3 %igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5 %ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102 °C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5 %ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102 °C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

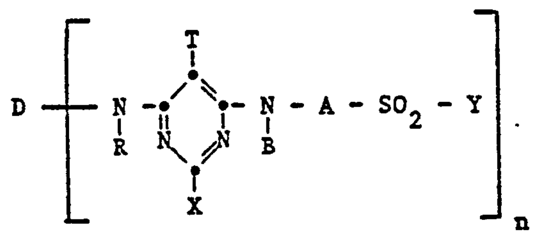

(1)

worin D der Rest eines organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen, Thioxanthon-, Nitroaryl-, Naphthochinon-, Pyrenchinon- oder Perylentetracarbimid-Reihe, R Wasserstoff oder gegebenenfalls substituiertes $C_{1-4}$-Alkyl, X ein als Anion abspaltbarer Substituent, A Arylen oder $C_{2-6}$-Alkylen, Y ein Rest $—CH=CH_2$ oder $—CH_2CH_2—Z$, Z ein unter alkalischen Bedingungen abspaltbarer anorganischer oder organischer Rest, B Wasserstoff oder der Rest eines gegebenenfalls substituierten Kohlenwasserstoffs, T ein negativer Substituent, und n = 1 oder 2 ist.

2. Reaktivfarbstoffe gemäss Anspruch 1, worin X Fluor oder Chlor ist.

3. Reaktivfarbstoffe gemäss Anspruch 1, worin T Methylsulfonyl ist.

4. Reaktivfarbstoffe gemäss Anspruch 1, worin B Wasserstoff oder $C_{1-4}$-Alkyl, und A gegebenenfalls substituiertes Phenylen oder Naphthylen, oder $C_{2-6}$-Alkylen ist.

5. Reaktivfarbstoffe gemäss Anspruch 1, worin B ein Rest der Formel

$$—A—SO_2—Y \qquad (2)$$

ist, worin A und Y die in Anspruch 1 angegebenen Bedeutungen haben.

6. Reaktivfarbstoffe gemäss Anspruch 5, worin A Aethylen ist.

7. Reaktivfarbstoffe gemäss Anspruch 4, der Formel

(Siehe Formel Seite 38 f.)

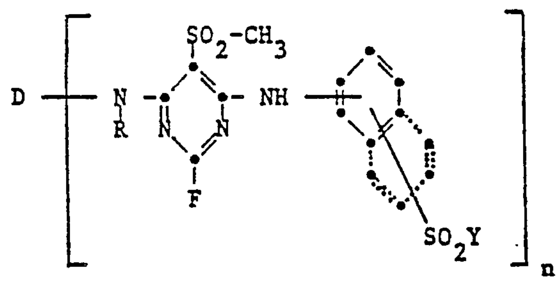

(3)

worin D, R, Y und n die in Anspruch 1 angegebenen Bedeutungen haben.

8. Reaktivfarbstoffe gemäss Anspruch 4, der Formel

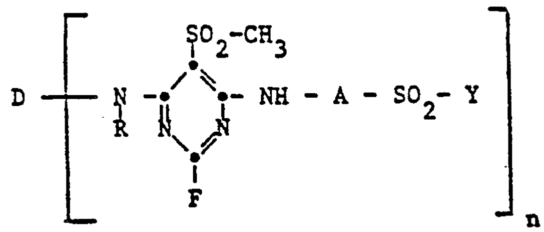

(4)

worin D, R, Y und n die in Anspruch 1 angegebenen Bedeutungen haben, und A $C_{2-4}$-Alkylen ist.

9. Reaktivfarbstoffe gemäss Anspruch 8, worin A Aethylen ist.

10. Reaktivfarbstoffe gemäss Anspruch 5, der Formel

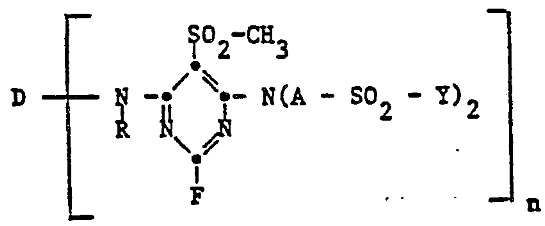

(5)

worin D, R, Y und n die in Anspruch 1 angegebenen Bedeutungen haben, und A $C_{2-4}$-Alkylen ist.

11. Reaktivfarbstoffe gemäss Anspruch 10, worin A Aethylen ist.

12. Reaktivfarbstoffe gemäss Anspruch 1, worin Y Vinyl, β-Sulfatoäthyl, β-Thiosulfatoäthyl, β-Phosphatoäthyl, β-Chloräthyl oder β-Acetoxyäthyl ist.

13. Reaktivfarbstoffe gemäss Anspruch 12, worin D der Rest eines Mono- oder Disazofarbstoffes ist.

14. Reaktivfarbstoffe gemäss Anspruch 12, worin D der Rest eines Metallkomplexazo- oder Formazanfarbstoffes ist.

15. Reaktivfarbstoffe gemäss Anspruch 12, worin D der Rest eines Anthrachinonfarbstoffes ist.

16. Reaktivfarbstoffe gemäss Anspruch 14, worin D der Rest eines 1 : 1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

17. Reaktivfarbstoffe gemäss Anspruch 13, der Formel

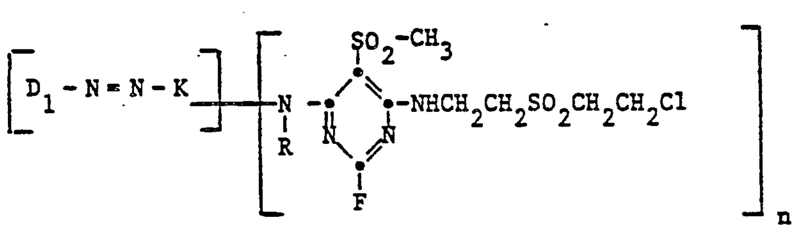

(6)

worin $D_1$ der Rest einer Diazokomponente der Benzol- oder Naphthalinreihe, K der Rest einer Kupplungskomponente der Benzol- oder Naphthalinreihe oder der heterocyclischen Reihe, R Wasserstoff, Methyl oder Aethyl, und n = 1 oder 2 ist, und der Reaktivrest an die Diazokomponente oder an die Kupplungskomponente gebunden ist, oder je ein Reaktivrest an die Diazokomponente und an die Kupplungskomponente gebunden ist.

18. Reaktivfarbstoffe gemäss Anspruch 13, der Formel

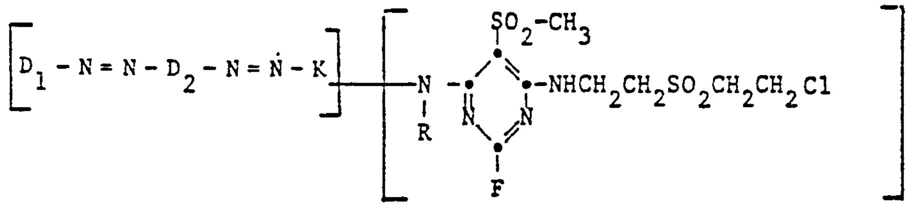 (7)

worin $D_1$ und $D_2$ je ein Rest einer Diazokomponente der Benzol- oder Naphthalinreihe, K der Rest einer Kupplungskomponente der Benzol- oder Naphthalinreihe oder der heterocyclischen Reihe, R Wasserstoff, Methyl oder Aethyl, und n = 1 oder 2 ist, und der Reaktivrest an die Diazokomponente $D_1$ oder an die Kupplungskomponente K gebunden ist, oder je ein Reaktivrest an $D_1$ und K gebunden ist.

19. Reaktivfarbstoffe gemäss Anspruch 13, der Formel

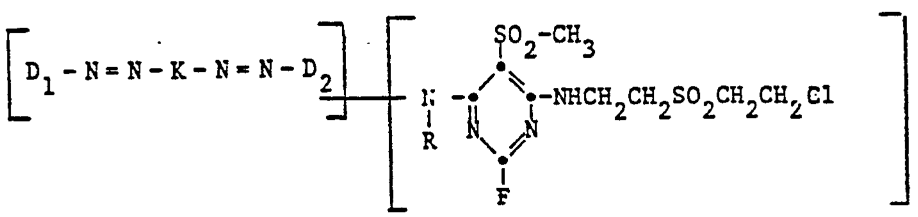 (8)

worin $D_1$ und $D_2$ je ein Rest einer Diazokomponente der Benzol- oder Naphthalinreihe, K der Rest einer Kupplungskomponente der Aminonaphtholsulfonsäure-Reihe, R Wasserstoff, Methyl oder Aethyl, und n = 1 oder 2 ist, und der Reaktivrest an die Diazokomponente $D_1$ oder an die Diazokomponente $D_2$ gebunden ist, oder je ein Reaktivrest an $D_1$ und $D_2$ gebunden ist.

20. 1 : 1-Kupferkomplexe von Reaktivfarbstoffen gemäss Anspruch 18.

21. Verfahren zur Herstellung von Reaktivfarbstoffen gemäss Anspruch 1, dadurch gekennzeichnet, dass man organische Farbstoffe der Formel

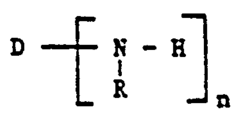 (9)

oder Farbstoffvorprodukte, mindestens ein Aequivalent eines Pyrimidins der Formel

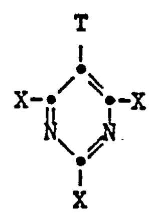 (10)

und mindestens ein Aequivalent eines Amins der Formel

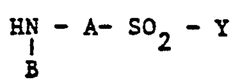 (11)

in beliebiger Folge zu einem Reaktivfarbstoff der Formel (1) kondensiert, wobei D, R, n, X, T, A, Y und B in den Formeln (9) bis (11) die in Anspruch 1 angegebenen Bedeutungen haben, und dass man im Falle der Verwendung von Farbstoffvorprodukten, diese in die gewünschten Endfarbstoffe umwandelt.

22. Verwendung der Reaktivfarbstoffe gemäss Anspruch 1 zum Färben oder Bedrucken.

23. Verwendung gemäss Anspruch 22, zum Färben oder Bedrucken von Cellulosefasern.

**Claims**

1. A reactive dye of formula

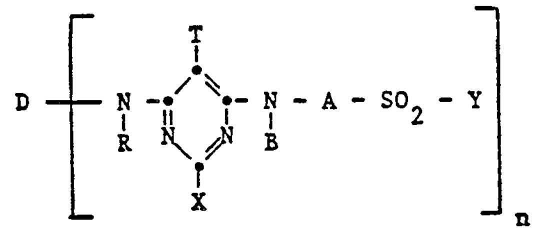

(1)

wherein D is the radical of an organic dye of the monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide series, R is hydrogen or substituted or unsubstituted $C_{1-4}$ alkyl, X is a substituent which can be removed in the form of an anion, A is arylene or $C_{2-6}$ alkylene, Y is a $—CH=CH_2$ or $—CH_2—CH_2—Z$ radical, Z is an inorganic or organic radical which is removable under alkaline conditions, B is hydrogen or the radical of a substituted or unsubstituted hydrocarbon, T is a negative substituent, and n is 1 or 2.

2. A reactive dye according to claim 1, wherein X is fluorine or chlorine.

3. A reactive dye according to claim 1, wherein T is methylsulfonyl.

4. A reactive dye according to claim 1, wherein B is hydrogen or $C_{1-4}$ alkyl and A is substituted or unsubstituted phenylene or naphthylene or $C_{2-6}$ alkylene.

5. A reactive dye according to claim 1, wherein B is a radical of the formula

$$—A—SO_2—Y \qquad (2)$$

in which A and Y are as defined in claim 1.

6. A reactive dye according to claim 5, wherein A is ethylene.

7. A reactive dye according to claim 4, of formula

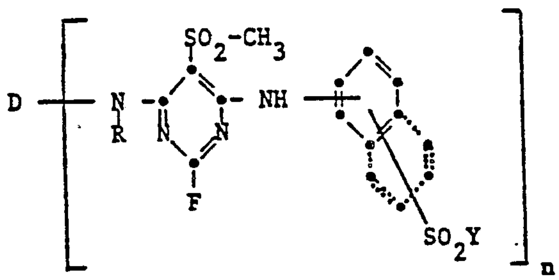

(3)

wherein D, R, Y and n are as defined in claim 1.

8. A reactive dye according to claim 4, of formula

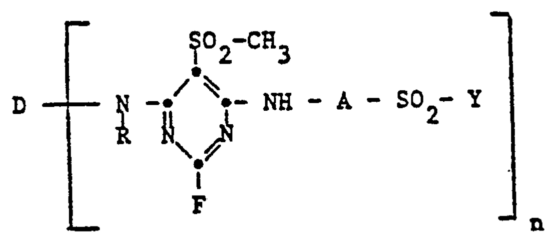

(4)

wherein D, R, Y and n are as defined in claim 1, and A is $C_{2-4}$ alkylene.

9. A reactive dye according to claim 8, wherein A is ethylene.

10. A reactive dye according to claim 5, of formula

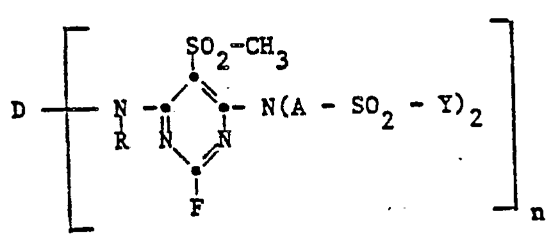

(5)

wherein D, R, Y and n are as defined in claim 1, and A is $C_{2-4}$ alkylene.

11. A reactive dye according to claim 10, wherein A is ethylene.

12. A reactive dye according to claim 1, wherein Y is vinyl, β-sulfatoethyl, β-thiosulfatoethyl, β-phosphatoethyl, β-chloroethyl or β-acetoxyethyl.

13. A reactive dye according to claim 12, wherein D is the radical of a monoazo or disazo dye.

14. A reactive dye according to claim 12, wherein D is the radical of a metal complex azo or formazan dye.

15. A reactive dye according to claim 12, wherein D is the radical of an anthraquinone dye.

16. A reactive dye according to claim 14, wherein D is the radical of a 1 : 1 copper complex azo dye of the benzene or naphthalene series and the copper atom is bonded on each side to a metallisable group in the ortho-position relative to the azo bridge.

17. A reactive dye according to claim 13, of formula

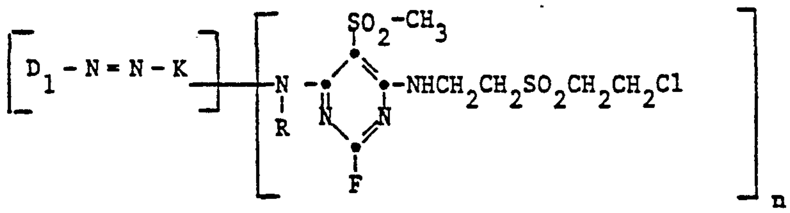

(6)

wherein $D_1$ is the radical of a diazo component of the benzene or naphthalene series, K is the radical of a coupling component of the benzene or naphthalene series or of the heterocyclic series, R is hydrogen, methyl or ethyl, n is 1 or 2, and the reactive radical is bonded to the diazo component or to the coupling component, or one reactive radical is bonded to the diazo component and one to the coupling component.

18. A reactive dye according to claim 13, of formula

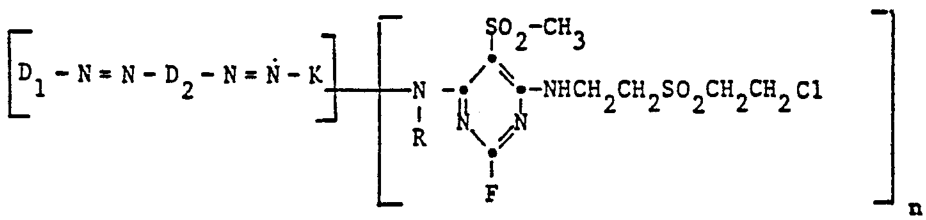

(7)

wherein $D_1$ and $D_2$ are each a radical of a diazo component of the benzene or naphthalene series, K is the radical of a coupling component of the benzene or naphthalene series or of the heterocyclic series, R is hydrogen, methyl or ethyl, n is 1 or 2, and the reactive radical is bonded to diazo component $D_1$ or to coupling component K, or a reactive radical is bonded to each of $D_1$ and K.

19. A reactive dye according to claim 13, of formula

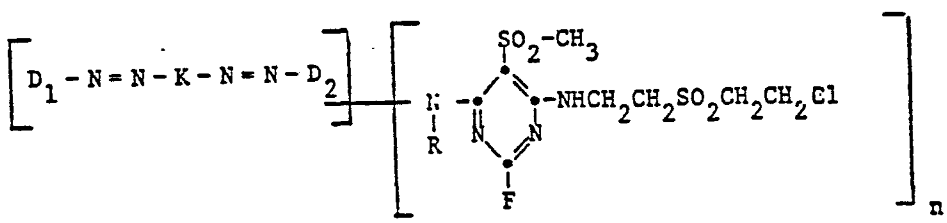

(8)

wherein $D_1$ and $D_2$ are each a radical of a diazo component of the benzene or naphthalene series, K is the radical of a coupling component of the aminonaphtholsulfonic acid series, series, R is hydrogen, methyl or ethyl, n is 1 or 2, and the reactive radical is bonded to diazo component $D_1$ or to diazo component $D_2$, or a reactive radical is bonded to each of $D_1$ and $D_2$.

20. A 1 : 1 copper complex of a reactive dye according to claim 18.

21. A process for the preparation of a reactive dye according to claim 1, which comprises condensing, in any order, an organic dye of formula

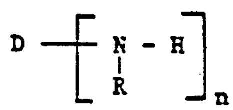

(9)

or a dye precursor, at least one equivalent of a pyrimidine of formula

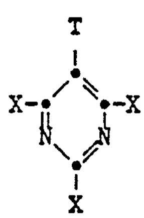

(10)

and at least one equivalent of an amine of formula

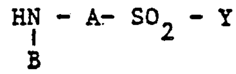

(11)

to give a reactive dye of formula (1), in which formulae (9) and (11) D, R, n, X, T, A, Y and B are as defined in claim 1, and, if a dye precursor is used, converting it into the desired end dye.

22. Use of a reactive dye according to claim 1 for dyeing and printing.

23. Use according to claim 22 for dyeing or printing cellulose fibres.

**Revendications**

1. Colorants réactifs de formule

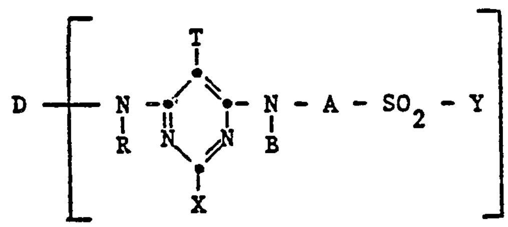

(1)

dans laquelle D est le reste d'un colorant organique de la série : mono- ou polyazoique, azoique à complexe métallique, anthraquinone, phtalocyanine, formazan, azométhine, dioxazine, phénazine, stilbène, triphénylméthane, xanthène, thioxanthone, nitroaryle, naphtoquinone, pyrènequinone ou pérylènetétracarbimide,

R est un hydrogène ou un alkyle en $C_{1-4}$ éventuellement substitué,
X est un substituant séparable sous forme d'anion,
A est un arylène ou un alkylène en $C_{2-6}$,
Y est un reste $—CH=CH_2$ ou $—CH_2—CH_2—Z$,
Z est un reste organique ou inorganique séparable dans des conditions alcalines,
B est un hydrogène ou le reste d'un hydrocarbure éventuellement substitué,
T est un substituant électronégatif et
n vaut 1 ou 2.

2. Colorants réactifs conformes à la revendication 1, dans lesquels X est un fluor ou un chlore.

3. Colorants réactifs conformes à la revendication 1, dans lesquels T est un méthylsulfonyle.

4. Colorants réactifs conformes à la revendication 1, dans lesquels B est un hydrogène ou un alkyle en $C_{1-4}$, et A un phénylène ou naphtylène éventuellement substitué, ou un alkylène en $C_{2-6}$.

5. Colorants réactifs conformes à la revendication 1, dans lesquels B est un reste de formule

$$—A—SO_2—Y \qquad (2)$$

dans laquelle A et Y ont les significations données dans la revendication 1.

6. Colorants réactifs conformes à la revendication 5, dans lesquels A est un groupe éthylène.

7. Colorants réactifs conformes à la revendication 4, de formule

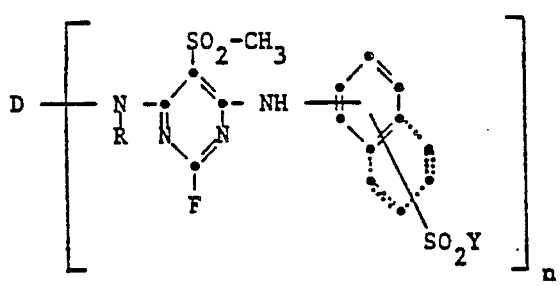

(3)

dans lesquels D, R, Y et n ont la signification donnée dans la revendication 1.

8. Colorants réactifs conformes à la revendication 4, de formule

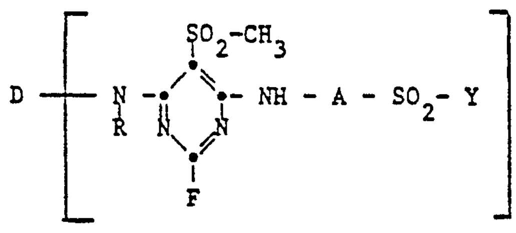

(4)

dans lesquels D, R, Y et n ont la signification donnée dans la revendication 1, et où A est un alkylène en $C_{2-4}$.

9. Colorants réactifs conformes à la revendication 8, dans lesquels A est un groupe éthylène.

10. Colorants réactifs conformes à la revendication 5, de formule

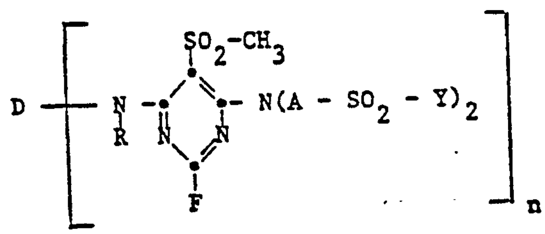

(5)

dans lesquels D, R, Y et n ont les significations données dans la revendication 1, et où A est un alkylène en $C_{2-4}$.

11. Colorants réactifs conformes à la revendication 10, dans lesquels A est un groupe éthylène.

12. Colorants réactifs conformes à la revendication 1, dans lesquels Y est un vinyle, β-sulfatoéthyle, β-thiosulfatoéthyle, β-phosphatoéthyle, β-chloréthyle, ou β-acétoxyéthyle.

13. Colorants réactifs conformes à la revendication 12, dans lesquels D est le reste d'un colorant monoazoique ou diazoique.

14. Colorants réactifs conformes à la revendication 12, dans lesquels D est le reste d'un colorant azoique à complexe métallique ou d'un colorant formazan.

15. Colorants réactifs conformes à la revendication 12, dans lesquels D est le reste d'un colorant anthraquinone.

16. Colorants réactifs conformes à la revendication 14, dans lesquels D est le reste d'un colorant azoique à complexe de cuivre 1 : 1 de la série du benzène ou du naphtalène, et où l'atome de cuivre est relié, de chacun des deux côtés, à un groupe métallable en position ortho par rapport au pont azo.

17. Colorants réactifs conformes à la revendication 13, de formule

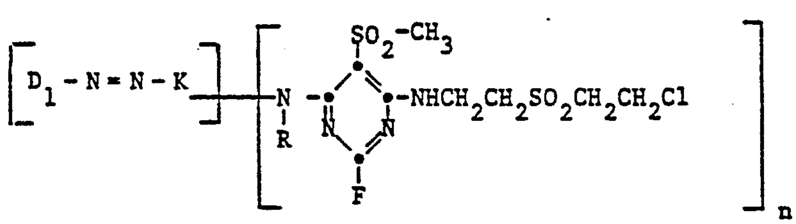

(6)

dans lesquels $D_1$ est le reste d'un composant diazo de la série du benzène ou du naphtalène, K est le reste d'un composant de copulation de la série du benzène ou du naphtalène ou de la série hétérocyclique, R est un hydrogène, éthyle ou méthyle et n vaut 1 ou 2, et où le reste réactif est lié au composant diazo ou au composant de copulation, ou un reste réactif est lié au composant diazo et un autre au composant de copulation.

18. Colorants réactifs conformes à la revendication 13, de formule

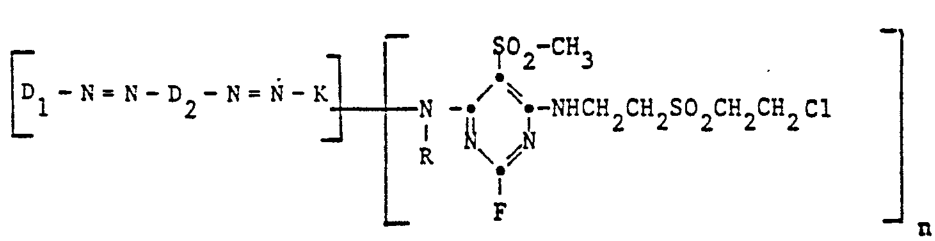

(7)

dans lesquels $D_1$ et $D_2$ sont chacun un reste d'un composant diazo de la série du benzène ou du naphtalène, K est le reste d'un composant de copulation de la série du benzène ou du naphtalène ou de la série hétérocyclique, R est un hydrogène, méthyle ou éthyle, et n vaut 1 ou 2, et où le reste réactif est lié au composant diazo $D_1$ ou au composant de copulation K, ou un reste réactif est lié à $D_1$ et un autre à K.

19. Colorants réactifs conformes à la revendication 13, de formule

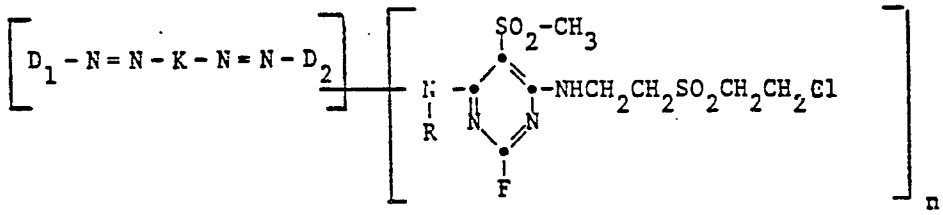

(8)

dans lesquels $D_1$ et $D_2$ sont chacun un reste d'un composant diazo de la série du benzène ou du naphtalène, K est le reste d'un composant de copulation de la série de l'acide aminonaphtosulfonique, R est un hydrogène, méthyle ou éthyle, et n vaut 1 ou 2, et où le reste réactif est lié au composant diazo $D_1$ ou au composant diazo $D_2$, ou un reste réactif est lié à $D_1$ et un autre à $D_2$.

20. Complexes de cuivre 1 : 1 de colorants réactifs conformes à la revendication 18.

21. Procédé pour la préparation de colorants réactifs conformes à la revendication 1, caractérisé par le fait que l'on condense des colorants organiques de formule

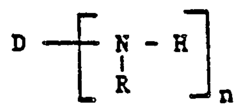

(9)

ou des précurseurs de colorant, avec au moins un équivalent d'une pyrimidine de formule

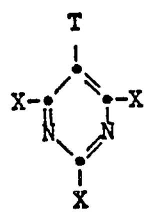

(10)

et au moins un équivalent d'une amine de formule

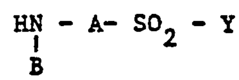

(11)

dans un ordre quelconque, en un colorant réactif de formule (1), D, R, n, X, T, A, Y et B dans les formules (9) à (11) ayant les significations données dans la revendication 1, et que, si l'on utilise des précurseurs, ceux-ci sont transformés en colorants définitifs souhaités.

22. Utilisation des colorants réactifs conformes à la revendication 1 pour la teinture et pour l'impression.

23. Utilisation, conformément à la revendication 22, pour la teinture ou l'impression de fibres de cellulose.